# Europäisches Patentamt
# European Patent Office
## Office européen des brevets

(19)

(11) Publication number: **0 082 634**
**B1**

(12) **EUROPEAN PATENT SPECIFICATION**

(45) Date of publication of patent specification: **21.08.85**

(51) Int. Cl.⁴: **C 01 B 3/36**

(21) Application number: **82306551.1**

(22) Date of filing: **08.12.82**

(54) Trim control for partial oxidation gas generator.

(30) Priority: **21.12.81 US 333158**
**21.12.81 US 333159**

(43) Date of publication of application:
**29.06.83 Bulletin 83/26**

(45) Publication of the grant of the patent:
**21.08.85 Bulletin 85/34**

(84) Designated Contracting States:
**DE FR GB IT NL SE**

(56) References cited:
**DE-A-2 845 498**
**US-A-2 941 877**

(73) Proprietor: **TEXACO DEVELOPMENT CORPORATION**
**2000 Westchester Avenue**
**White Plains New York 10650 (US)**

(72) Inventor: **Dille, Roger McCormick**
**4449 Lakeshore Drive**
**Port Arthur Texas 77640 (US)**
Inventor: **Robin, Allen Maurice**
**2517 East Gelid Avenue**
**Anaheim, CA. 92806 (US)**
Inventor: **Middleton, Leigh Royall**
**280 Rosine Street**
**Beaumont Texas 77707 (US)**
Inventor: **Brent, Albert**
**1 Westwind Court**
**Huntington New York 11743 (US)**

(74) Representative: **Ben-Nathan, Laurence Albert et al**
**c/o MICHAEL BURNSIDE & PARTNERS 2 Serjeants' Inn Fleet Street**
**London EC4Y 1HL (GB)**

Courier Press, Leamington Spa, England.

**0 082 634**

**Description**

This invention relates to a system and method for controlling a partial oxidation gas generator.

In the partial oxidation process for the production of synthesis gas, a specific amount of particulate carbon is maintained in the reaction zone in order to prevent damage to the refractory lining from the nickel and vanadium compounds which are introduced with the liquid hydrocarbonaceous fuel feedstream. However, excess particulate carbon in the gas stream will increase gas cleaning costs and adversely affect downstream operations. It is also necessary in the partial oxidation process to maintain the temperature in the reaction zone within a narrow range so as to avoid substantial changes in the chemical composition of the product gas.

Coassigned U.S. Patent No. 2,941,877 pertains to a scheme for controlling a gas generator based on the amount of $CH_4$ produced. However, in that process comparatively large adjustments to the oxygen to fuel ratio were made to change the temperature in the reaction zone; and, this would produce a corresponding opposite effect on the carbon-make. Thus, an adjustment made to correct the temperature may readily put the carbon-make out of specification. In contrast, by means of the improved subject method as provided herein, the partial oxidation gas generator may be run continuously while the carbon-make and/or the temperature in the reaction zone are closely controlled.

The invention relates to a system and method for automatically trim controlling the amount of free-carbon particulate produced and/or the temperature in the reaction zone in a process for the partial oxidation of a liquid hydrocarbonaceous fuel with a free $O_2$-containing gas in the presence of a temperature moderator.

The liquid hydrocarbonaceous fuel is introduced at a predetermined rate into the refractory-lined reaction zone of a free-flow noncatalytic partial oxidation gas generator for the production of synthesis gas, reducing gas or fuel gas. In this trim control scheme, the amount of free particulate carbon produced in the reaction zone of the partial oxidation gas generator is controlled in the following manner. The stream of carbon-water dispersion that is discharged from the effluent gas quench cooling and scrubbing zone is automatically sampled and analyzed by a conventional carbon analyzer means. Over a predetermined period of time, a plurality of successive samples of the stream of carbon-water dispersion are analyzed and corresponding signals responsive thereto are generated. Each successive signal is representative of the weight fraction of particulate carbon. In a storage and averaging means, the average weight fraction of particulate carbon is then automatically determined. A signal corresponding to this value is multiplied by a signal representing the current flow rate of the stream of carbon-water dispersion to provide a signal corresponding to the actual carbon-make. A signal corresponding to the desired carbon-make is determined by design conditions and depends on such factors as the desired rate of carbon supplied by the liquid hydrocarbonaceous fuel, economics and refractory life. A value representing the relative difference between the actual and desired carbon-make is then automatically computed, and a corresponding signal is provided to a comparator means. The % change in the current rate of flow of the free-oxygen containing gas stream is then automatically determined in the comparator means in order to bring the actual and desired carbon-make closer together. A corresponding signal is multiplied by a signal representing the current flow rate of the free-oxygen containing gas feedstream. A corresponding adjustment signal is then provided to a flow rate regulating means that controls the free-oxygen containing gas feedstream. For example, a signal from a multiplying means resets a flow recorder-controller which provides an adjustment signal to regulate a control valve in the free-oxygen containing gas feedline. By this means, the flow rate of the free-oxygen containing gas stream is automatically adjusted by a corresponding small percentage.

The second control scheme by which the temperature in the reaction zone is automatically controlled may be employed separately or preferably in sequence after the previously described carbon control adjustment and after conditions in the reaction zone of the partial oxidation gas generator have stabilized. In such case, the effluent gas stream leaving said reaction zone is quench cooled and scrubbed with water in a gas quench cooling zone, and then automatically sampled and analyzed by a conventional gas analyzer means. Over a predetermined period of time, a plurality of successive samples of the cooled and cleaned effluent gas stream are analyzed and corresponding signals responsive thereto are generated. Each successive signal is representative of the mole fraction (dry basis) of $CH_4$. In a storage and averaging means the average mole fraction of $CH_4$ (dry basis) is then automatically determined and a corresponding signal is provided. The actual temperature in the reaction zone is then determined as a function of the methane concentration. Values for the actual temperature in the reaction zone of the gas generator, and the relative difference between the actual and desired temperatures in the reaction zone are automatically computed and signals corresponding to these values are provided to a comparator means. A value representing the % change to be made in the current rate of flow of the temperature moderator feedstream i.e. $H_2O$ in order to bring the actual and desired temperature in the reaction zone closer together is then automatically determined. A corresponding signal is multiplied by a signal representing the current flow rate of the temperature moderator feedstream. A corresponding signal is then provided to a flow rate regulating means that automatically controls the flow rate of the temperature moderator feedstream. For example, a signal may be provided to reset a speed control that provides an adjustment signal to regulate the speed of a positive displacement pump in the temperature moderator feedline. By this means, the current flow rate of the temperature moderator stream is automatically adjusted by a corresponding small percentage.

2

Alternatively, the operator is warned if an adjustment signal would increase or decrease the flow rate of the free-oxygen containing gas and/or the temperature moderator feedstream more than a specific amount. In such case, no adjustment to the flow rate is made but a high-low level alarm is activated.

In a preferred embodiment, the two control schemes are employed in sequence according to the following steps, which are repeatedly cycled: (1) small determined adjustment to the flow rate of the free-oxygen containing gas feedstream, (2) gasifier stabilization period, (3) small determined adjustment to the flow rate of the temperature moderator feedstream, and (4) gasifier stabilization period.

The objects and advantages of the invention will appear hereafter from consideration of the detailed description which follows, taken together with the accompanying drawings, wherein embodiments of the invention are illustrated by way of example. It is to be expressly understood, however, that the drawings are for illustration purposes only, and are not to be construed as defining the limits of the invention.

In the drawings:—

Fig. 1 is a partial simplified block diagram and a partial schematic of a control system, constructed in accordance with the present invention, for controlling a partial oxidation synthesis gas generator;

Fig. 2 is a detailed block diagram of the system control unit shown in Fig. 1;

Figs. 3, 4 and 5 are detailed block diagrams of a storage and averaging means, comparator means, and programming means shown in Fig. 2.

Partial oxidation noncatalytic gas generators require steady, stable flows of the feedstreams comprising free-oxygen containing gas, liquid hydrocarbonaceous fuel, and temperature moderator at precisely set amounts. This is necessary for the conversion of the liquid hydrocarbonaceous fuel to synthesis gas, reducing gas, or fuel gas in a steady, efficient and safe manner.

By means of the subject control system, when an adjustment up or down to the flow rate of a feedstream to the gasifier is required, such as in response to a small change in the quality of the feedstock, a limited adjustment may be made in small steps. Each adjustment is then followed by a gasifier stabilization period. Further, the determination for the extent of each adjustment if any is based on the average of a plurality of successive samples analysed over a period of time. This will minimise the effect of any momentary changes or surges in the system.

Synthesis gas, reducing gas, and fuel gas are preferably made by the partial oxidation of a hydrocarbonaceous fuel in a noncatalytic free-flow synthesis gas generator. For example, a liquid hydrocarbonaceous fuel feedstock such as petroleum oil, is reacted with a free-oxygen containing gas optionally in the presence of a temperature moderator at an autogenously maintained temperature within the range of 1700 to 3000°F (927 to 1649°C) and at a pressure in the range of 1 to 250 atmospheres absolute (1 to 253 bars absolute).

The gas generator for carrying out the partial oxidation reaction in the subject process preferably consists of a compact, unpacked, free-flow noncatalytic refractory lined steel pressure vessel of the type described in co-assigned U.S. Pat. No. 2,809,104 issued to D. M. Strasser et al, which patent is incorporated herewith by reference. The raw synthesis gas stream from the gas generator may have the following composition in mole %: $H_2$20 to 80; CO 60 to 15: $CO_2$3 to 30; $H_2O$ 5—15; $CH_4$0.01 to 20; $N_2$ nil to 60: $H_2S$ nil to 5.0: COS nil to 0.2; Ar nil to 2; and from 0.1 to 20 wt.% of particulate carbon (basis weight % of C in the hydrocarbonaceous fuel). After quenching and/or scrubbing with water, the mole % $H_2O$ in the gas stream is increased and is present in the range of 20—60. Accordingly, the mole % of the other gaseous constituents are decreased proportionately.

A wide variety of liquid hydrocarbonaceous fuels are suitable as feedstock for the partial oxidation process, either alone or in combination with each other or with particulate carbon. The liquid hydrocarbonaceous feeds includes fossil fuels such as: various liquid hydrocarbon fuels including petroleum distillates and residua, gasoline, kerosine, naphtha, asphalt, gas oil, residual fuel, reduced crude, fuel oil, crude petroleum, coal tar, coal derived oil, shale oil, tar sand oil, liquefied petroleum gas, aromatic hydrocarbons (such as benzene, toluene, xylene fractions), cycle gas oil from fluid-catalytic-cracking operations, furfural extract of coker gas oil, and mixtures thereof. Suitable liquid hydrocarbon fuel feeds as used herein are by definition liquid hydrocarbonaceous fuel feeds that have a gravity in degrees API in the range of −20 to 100 (specific gravity 1.27 to 0.61).

Further, included also by definition as a liquid hydrocarbonaceous fuel are liquid oxygenated hydrocarbonaceous materials, i.e. liquid hydrocarbon materials containing combined oxygen, including carbohydrate, cellulosic materials, oxygenated fuel oil, waste liquids and by-products from chemical processes for oxygenated hydrocarbonaceous materials, alcohols ketones, aldehydes, organic acids, esters, ethers, and mixtures thereof. Further, a liquid oxygenated hydrocarbonaceous material may be in admixture with one of said liquid petroleum materials.

Further, included also by definition as a liquid hydrocarbonaceous fuel are pumpable slurries of de-ashed or low-ash containing solid carbonaceous fuels i.e. less than about 1.0 wt.% of ash, from the group consisting of coal, lignite, coke from coal, coal char, coal liquefaction residues, particulate carbon, petroleum coke, carbonaceous solids derived from oil shale, tar sands and pitch, concentrated sewer sludge, bits of garbage, rubber, and mixtures thereof in a liquid carrier from the group consisting of water, liquid hydrocarbon fuel, and mixtures thereof.

The free-oxygen containing gas may be selected from the group consisting of air, oxygen-enriched air (22 mole percent $O_2$ and higher), and preferably substantially pure oxygen (95 mole percent $O_2$ and higher).

**0 082 634**

The amount of nitrogen in the product gas may be substantially reduced or eliminated by using substantially pure oxygen. In the reaction zone, the ratio of the atoms of oxygen to atoms of carbon in the feed is in the range of 0.7 to 1.5. Alternatively, this ratio may be expressed as 0.7 to 1.5 atoms of oxygen per atom of carbon.

$H_2O$, in liquid or gaseous phase, is preferably introduced into the reaction zone to help control the reaction temperature, to act as a dispersent of the hydrocarbonaceous fuel fed to the reaction zone, and to serve as a reactant to increase the relative amount of hydrogen produced. Other suitable temperature moderators include $CO_2$-rich gas, a cooled portion of effluent gas from the gas generator, cooled off-gas from an integrated ore-reduction zone, nitrogen, and mixtures thereof. The weight ratio $H_2O$/fuel in the reaction zone may be in the range of above 0 to 5.0, such as 0.15 to 3.0.

Preheating of the reactants is optional but generally desirable. For example, a hydrocarbon oil and steam may be preheated to a temperature in the range of 100 to 800°F (38 to 427°C) and the oxygen-free containing gas may be preheated to a temperature in the range of 100 to 1000°F (38 to 538°C).

It is normal to produce from hydrocarbonaceous fuel feeds by partial oxidation 0.1 to 20 weight percent of unreacted particulate carbon or free carbon soot (basis wt. % of carbon in the hydrocarbonaceous fuel feed). This unreacted particulate carbon is also referred to herein as the carbon-make. The free carbon soot is produced in the reaction zone of the gas generator, for example, by cracking hydrocarbonaceous fuel feeds. Carbon soot will prevent damage to the refractory lining in the generator by constituents which are present as ash components in residual oils. With heavy crude or fuel oils, it is preferable to leave about 1 to 3, such as 2, weight percent of particulate carbon (basis wt. % carbon in the liquid hydrocarbonaceous fuel feed) in the product gas. With lighter distillate oils, progressively lower carbon soot yields are maintained.

In one embodiment of our invention, the hot gaseous effluent from the reaction zone of the synthesis gas generator may be quickly cooled below the reaction temperature to a temperature in the range of 180° to 700°F (82 to 371°C) by direct quenching in water in a gas-liquid contacting or quenching zone. For example, the cooling water may be contained in a quench vessel or chamber located immediately downstream from the reaction zone of said gas generator. An interconnecting passage between the reaction zone and the quench zone through which the hot effluent gases may pass substantially equalises the pressure in the two zones. Recycle water from the carbon recovery zone or lean carbon-water dispersion from the gas scrubbing zone may be introduced through a spray ring at the top of the quench zone. Large quantities of steam are generated in the quench vessel and saturate the process gas stream. For a detailed description of a quench chamber suitable for oil feeds, see coassigned U.S. Pat. No. 2,896,927 issued to R. E. Nagle et al, which is herewith incorporated by reference.

Substantially all of the solids are scrubbed from the effluent gas. A dispersion of unconverted particulate carbon and quench water is thereby produced. Any residual solids in the cooled and scrubbed effluent synthesis gas leaving the quench chamber may be removed by means of an additional water scrubbing in a conventional venturi or jet scrubber.

Alternatively, the hot effluent gas stream from the reaction zone of the synthesis gas generator may be cooled to a temperature in the range of 240° to 700°F (116 to 371°C) by indirect heat exchange in a waste heat boiler. The entrained solid particles may be then scrubbed from the effluent synthesis gas by contacting and further cooling the effluent stream of synthesis gas with quench water in a gas-liquid contact apparatus, for example, a quench dip-leg assembly, a spray tower, venturi, or jet scrubber, bubble plate contractor, packed column, or in a combination of said equipment. For a detailed description of cooling synthesis gas by means of a waste heat boiler and a scrubbing tower, reference, is made to coassigned U.S. Pat. No. 2,980,523 issued to R. M. Dille et al and incorporated herewith by reference.

It is desirable to maintain the concentration of particulate carbon in the gas cooling and scrubbing water streams in the range of 0.5 to 2 wt. % and preferably below 1.5 wt. %. In this manner, the dispersion of carbon in water will be maintained sufficiently fluid for easy pumping through pipelines and for further processing. The temperature in the scrubbing zone is in the range of 180° to 700° (82 to 371°C) and preferably in the range of 250° to 550°F (121 to 288°C). The pressure in the scrubbing zone is in the range of 1—250 atmospheres (1 to 253 bars), and preferably at least 25 atmospheres (25.3 bars). Suitably the pressure in the scrubbing zone is about the same as that in the gas generator, less ordinary pressure drop in the lines.

It is important with respect to the economics of the process that the particulate carbon be removed from the carbon-water dispersion and the resulting clear water to be recycled and reused for cooling and scrubbing additional particulate carbon from the effluent gas stream from the gas generator. Conventional carbon recovery systems may be employed, such as that described in coassigned U.S. Patent No. 4,134,740 issued to Charles P. Marion et al.

The cooled and cleaned synthesis gas, reducing gas, or fuel gas may be optionally subjected to conventional purification processes for removal of any unwanted gases.

A more complete understanding of the invention may be had by the discussion which follows and reference to the accompanying schematic drawings which show the subject invention in detail. Although the drawings illustrate preferred embodiments of the invention, it is not intended to limit the subject invention to the particular apparatus or materials described.

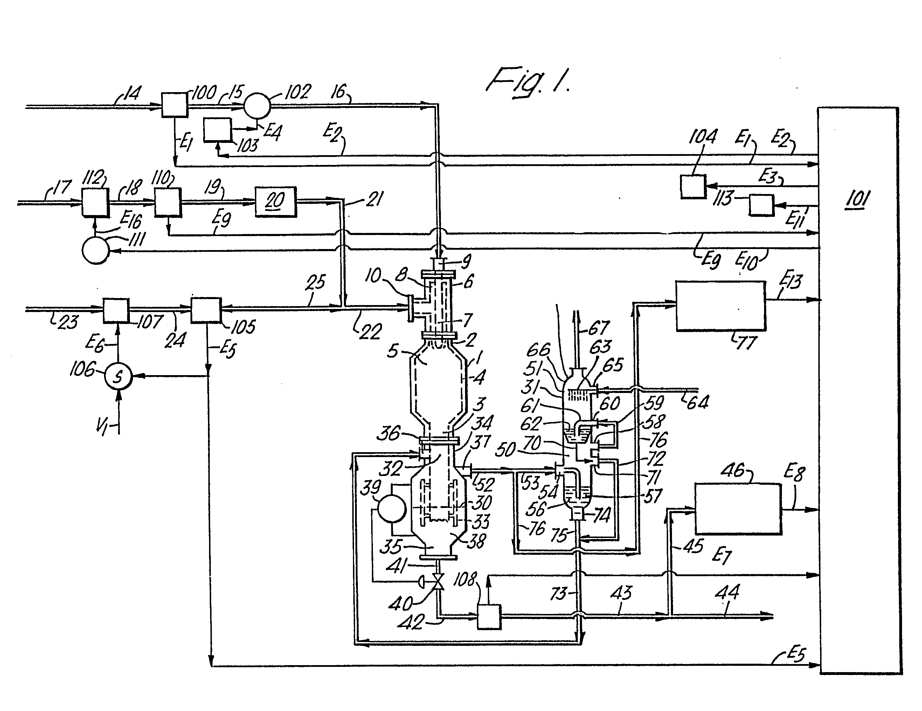

Referring to the figures in the drawings, Fig. 1 is a schematic representation of one embodiment of the invention showing control means for the continuous operation of a synthesis gas generator while

4

controlling the flow rate of the free-oxygen containing gas feedstream and the feedstream of temperature moderator.

In Fig. 1 there is shown a system for controlling a conventional type free-flow partial oxidation gas generator 1 for the production of synthesis gas, reducing gas or fuel gas. Gas generator 1 is a vertical pressure vessel with a coaxial upper flanged inlet 2 and lower flanged outlet 3. The inside walls are lined with refractory 4 and contain reaction zone 5. Coaxial burner 6 is mounted in upper inlet 2 and comprises coaxial central conduit 7 and annular passage 8. There is also upper inlet 9 to central conduit 7 and side inlet 10 to annular passage 8.

The feedstreams to burner 6 comrpise free-oxygen containing gas in lines 14—16, temperature moderator, for example, water in lines 17—19 and liquid hydrocarbonaceous fuel in lines 23—25. Water is preferably converted into steam by means of steam boiler 20. Optionally, steam boiler 20 may be by-passed by the temperature moderator in line 19. The feedstreams in lines 21 and 25 are mixed together in line 22. The mixture is passed through side inlet 10 of burner 6. In one embodiment, preheated feedstreams of water and liquid hydrocarbonaceous fuel are mixed together and the mixture is then heated to vaporized prior to being passed through the burner inlet. The free-oxygen containing gas passing through central conduit 7 and the mixture of liquid hydrocarbonaceous fuel and temperature moderator passing through annular passage 8 impinge together producing a finely dispersed mixture which undergoes partial oxidation in reaction zone 5.

The hot effluent gas stream from the reaction zone is suddenly contacted with water and cooled below the reaction temperature. The effluent gas stream is also cleaned and scrubbed free of entrained particulate carbon with water. This cooling and cleaning takes place in the subject embodiment in a quench cooling and scrubbing zone comprising conventional quench tank 30 and scrubbing column 31. In another embodiment, the cooling takes place in a waste heat boiler followed by cleaning and scrubbing with water. Quench tank 30 is located directly below gasifier 1 and comprises dip tube 32, splash ring 33, upper flanged inlet 34 connected to lower outlet 3, bottom central carbon-water dispersion outlet 35, upper side water inlet 36, and upper side gas outlet 37. A pool of water 38 is located in the bottom of quench tank 30. The level of the water is controlled by level controller 39 and valve 40 in carbon-water dispersion outlet line 41. The carbon-water dispersion discharges through lines 42—44 into a conventional carbon recovery system. A portion of the carbon-water dispersion is sampled by being withdrawn through line 45 and analyzed for carbon in conventional carbon analyzer 46.

The hot effluent gas stream from the reaction zone passes down through dip-tube 32 into quench water 38 where the gas stream is cooled and washed with water. Most of the entrained particulate carbon is removed from the gas stream to form a carbon-water dispersion with quench water 38. The gas stream bubbles up through quench water 38 and out through upper side outlet 37. When necessary a second gas cleaning stage may be included such as vertical gas scrubbing column 31. Gas scrubbing column 31 comprises lower compartment 50 and upper compartment 51, in tandem. The effluent gas stream from quench tank 30 passes through lines 52 and 53 and enters lower compartment 50 through lower inlet 54. The effluent gas stream is introduced below the surface of the pool of water 56 in the bottom of compartment 50 by way of dip-tube 57. The gas stream leaves through outlet 58 and passes through line 59, inlet 60, and dip-tube 61 into pool of water 62 in the bottom of upper compartment 51. The gas stream bubbles up through water 62 and receives a final washing with fresh make-up water by means of sparger 63 at the top of compartment 51. The fresh make-up water enters through line 64 and inlet 65. The cooled and cleaned effluent gas stream leaves through upper outlet 66 and line 67 and may be subjected to further gas purification or process steps downstream in the process. Depending on the gas composition, the cooled and cleaned effluent gas stream, with or without further processing, may be used as synthesis gas, reducing gas, or fuel gas. Scrub water 62 leaves through line 70 at the bottom of upper compartment 51 and passes through outlet 71, line 72 and mixes in line 73 with scrub water 56 which leaves lower compartment 50 through bottom outlet 74 and line 75. The dilute carbon-water dispersion in line 73 is passed through inlet 36 at the top of quench tank 30 and cools dip-tube 32 by flowing down its inside surface.

The cooled and cleaned effluent gas stream in line 52 is sampled and a portion is withdrawn through line 76. This gas is analyzed by means of conventional gas analyzer 77 for mole fraction of $CH_4$.

In the first trim control scheme, the actual rate of particulate carbon produced in the reaction zone of the gas generator i.e. carbon-make may be automatically brought closer to the desired rate of particulate carbon production established by design conditions by adjusting the flow rate of the free-oxygen containing gas feedstream stepwise up or down by discrete small amounts. The flow rate of the free-oxygen containing gas feedstream to gas generator, is controlled by sensing the flow rate of the free-oxygen containing gas in line 14 with a conventional type flow rate sensor 100 which provides a signal $E_1$, corresponding to the flow rate of the stream of free-oxygen containing gas in line 14—16 on its way to burner 6. Signal $E_1$, which corresponds to said flow rate, is provided to system control unit 101 which automatically provides signals $E_2$ or $E_3$ depending on the magnitude of a value representing the relative difference between the actual and desired rate of particulate carbon produced in the reaction zone, i.e. carbon-make. The value for the relative difference in carbon-make is determined in system control unit 101 and represents the (Actual-Desired Carbon-Make) divided by Desired Carbon Make. The value for the desired carbon-make may be determined by conventional calculations and is dependent on such factors as the composition and flow rate of the liquid hydrocarbonaceous fuel, the desired weight fraction of carbon in the liquid hydrocarbonaceous fuel feed which is entrained as particulate carbon in the effluent gas stream leaving the reaction zone, economics and refractory life.

Signal $E_2$ corresponds to a specific trim adjustment to the current free-oxygen containing gas flow rate and is provided to a flow rate regulating means. For example, signal $E_2$ adjusts the set point of flow recorder-controller 103 to enable flow recorder-controller 103 to provide signal $E_4$ to open or close control valve 102 a small specific amount. By this means the flow rate of the stream of free-oxygen containing gas in line 14 is automatically regulated a specific amount corresponding to a specific range of values representing the magnitude of the relative difference between the actual and desired carbon-make in the reaction zone. Thus, for each adjustment the flow rate of the free-oxygen containing gas stream in line 14 may be increased or decreased a specific small amount. For example, by this means the flow rate of the free-oxygen containing gas stream may be adjusted in the range of about 0 to $\pm 1.5$ percent in predetermined small amounts. In one embodiment, the signal from the system control unit drives a stepping motor to a desired position. The stepping motor, in turn, controls or regulates the output from a pneumatic or electrical converter to an analog controller or valve actuator.

Alarm signal $E_3$ from system control unit 101 is provided when a value representing the relative difference between the actual and desired rates of particulate carbon produced in the reaction zone is either higher or lower than a specific amount i.e. $\pm 0.25$. When signal $E_3$ is provided, alarm 104 which signals a high or low level of particulate carbon in the reaction zone is actuated. For example, should there be called for an adjustment to the current free-oxygen containing gas flow rate of a magnitude that exceeds plus or minus 1.5%, then said adjustment is not made but instead the high or low level alarm, respectively will be actuated. The alarm may be visual, auditory, or both. By this means, changes in feedstreams as well as equipment performance and efficiency are quickly detected. Further, it allows time for the operator to adjust controls or to put equipment in or out of service for any of the following reasons: to improve plant operation, to prevent costly damage to the equipment or to the refractory lining of the gas generator, to prevent the production of off-standard product gas, or to prevent the production of excess free particulate carbon which increases the cost of carbon separation.

The value representing the relative difference between the actual and desired carbon-make in the reaction zone is determined automatically in system control unit 101 and compared therein with manually or computer calculated and inserted values in order to automatically generate adjustment signal $E_2$ or alternatively alarm signal $E_3$. Other process variables which are introduced into system control unit 101 for these determinations include signals corresponding to the flow rates for the free-oxygen containing gas in line 14, liquid hydrocarbonaceous fuel in line 23, and the carbon-water dispersion discharged from quench tank 30; and also signals corresponding to the weight fraction of carbon in the carbon-water dispersion as determined by carbon analyzer 46, the weight fraction of carbon in the liquid hydrocarbonaceous fuel, and the desired weight fraction of the carbon in the liquid hydrocarbonaceous fuel feed to the reaction zone which is entrained as particulate carbon in the effluent gas stream leaving the reaction zone.

Accordingly, by means of a conventional flow rate sensor 105, the flow rate of the liquid hydrocarbonaceous fuel feedstock in line 24 is sensed on its way to reaction zone 5. Signal $E_5$ corresponding to said flow rate is provided to speed control unit 106 for pump 107 and to system control unit 101. In speed control unit 106, signal $E_5$ is automatically compared with a manually or computer calculated and inserted direct current voltage $V_1$ corresponding to the set point or desired flow rate. The flow rate of the liquid hydrocarbonaceous fuel is held at design conditions. When adjustment to the flow rate of the liquid hydrocarbonaceous fuel is required, speed controller 106 provides signal $E_6$ to adjust the speed of positive displacement feed pump 107 in line 23 in order to regulate by a certain proportion the rate of flow of the liquid hydrocarbonaceous fuel feedstream to gas generator 1. In one embodiment, signal $V_1$ is provided by system control unit 101.

By means of conventional flow rate sensor 108, the flow rate of the carbon-water dispersion in line 42 is sensed automatically on its way to a conventional carbon-recovery zone. Signal $E_7$, which corresponds to said flow rate, is provided to system control unit 101.

The weight fraction of carbon in one sample of carbon-water dispersion is determined by conventional type carbon analyzer means 46 and signal $E_8$ corresponding thereto is provided to system control unit 101. Carbon analyzer 46 may be for example of the type produced by Envirotech Corporation, Dohrmann Div., Santa Clara, California; or Astro Ecology Corp., Houston, Texas. By this means, over a predetermined period of time a plurality of different samples of the carbon-water dispersion from line 43 i.e. 2 to 5, say 3 samples are automatically taken in succession and separately analyzed for weight fraction of particulate carbon. Sampling intervals may be varied, for example by conventional timers in the range of about 5 to 55 minutes.

The response time for each sample run may take about 5—15 minutes, such as 10 minutes. Then in system control unit 101, a signal corresponding to the average weight fraction of carbon in the carbon-water dispersion over a period of time, such as 10 to 210 minutes, say 15 to 45 minutes is determined. Signals representing the actual carbon-make and the relative difference between the actual and desired carbon-make in the reaction zone are then automatically determined. A value representing the % change to be made in the current rate of flow of the free-oxygen containing gas feedstream is then automatically determined in a comparator means. A signal corresponding to this value and a signal corresponding to the current rate of flow of the free-oxygen containing gas are provided to a multiplying means. A corresponding signal responsive thereto is then provided to a flow rate regulating means that automatically adjusts the current flow rate of the free-oxygen containing gas stream. For example, a signal from said multiplying means resets a flow recorder-control means which provides an adjustment signal to regulate a flow rate control means such as a valve in the free-oxygen containing gas feedstream. In one embodiment, a control valve in the free-oxygen containing gas feedline is regulated by a direct signal from said multiplying means.

In the other trim control scheme, the actual temperature in the reaction zone may be automatically brought closer to the desired temperature established by design conditions by adjusting the flow rate of the temperature moderator stepwise up or down by discrete small amounts. In such case signals representing the actual temperature in the reaction zone of the gas generator and the relative difference between the actual and desired temperature in the reaction zone are automatically determined. A value representing the % change to be made in the current rate of flow of the temperature moderator feedstream is then automatically determined in a comparator means. A signal corresponding to this value and a signal corresponding to the current rate of flow of the temperature moderator are provided to a multiplying means. A corresponding signal responsive thereto is then provided to a flow rate regulating means that automatically adjusts the current flow rate of the temperature moderator feedstream. For example, a signal from said multiplying means is provided to a speed control means that provides an adjustment signal to a positive displacement pump in the temperature moderator feedline. By this means, the current flow rate of the temperature moderator stream is automatically adjusted by a corresponding small percentage. Alternatively, the signal from the multiplying means may be provided to a flow recorder control means which provides an adjustment signal to regulate a flow rate control means, such as a motorized valve, that automatically adjusts the flow rate of the temperature moderator feedstream.

In the subject embodiment, it was determined that the actual temperature in the reaction zone could be accurately represented as a function of the methane concentration in the cooled and clean effluent gas stream. Accordingly, the value representing the actual temperature in the reaction zone is obtained by providing to system control unit 101 over a period of time with a plurality of equally spaced separate signals. Each signal corresponds to the mole fraction of $CH_4$ (dry basis) in the cooled and clean effluent gas stream for that particular sample of the gas being analysed. A signal representing the average mole fraction of $CH_4$ (dry basis) in the cooled and clean effluent gas stream over a predetermined period of time is then computed in system control unit 101. A value for the actual temperature in the reaction zone as a function of the methane concentration is then automatically computed for example according to Equation (I) below. The temperature of the reaction zone as determined thereby is not affected by hot spots or by the extreme temperatures prevailing within the gasifier. Accordingly, it is an improvement over conventional mechanical means for measuring temperatures.

Equation I

$$T = \frac{A}{B + Ln(CH_4)} - 460$$

wherein:

t is the actual temperature in the reaction zone (°F) (°C×9/5)+32;

$(CH_4)$ is the average mole fraction of $CH_4$ (dry basis) in the effluent gas stream; and A and B are predetermined constants. With petroleum oil as the liquid hydrocarbonaceous fuel and $H_2O$ as the temperature moderator, at 400 psig (28 bars gauge) A=56,562.7 and B=20.295.

Thus, the quench cooled and scrubbed effluent gas stream in line 52 is automatically sampled and analysed for mole fraction of $CH_4$ (dry basis) by means of a conventional type gas analyser means 77. Gas analyser means 77 is a conventional type on-line mass spectrometer or a gas chromatograph system, for example of the type produced by Carle Instruments Inc., Anaheim, California, or Hewlett-Packard Corp., Palo Alto, California. By this means, over a predetermined period of time a plurality of different gas samples from line 52 i.e. about 2 to 5, say 3 samples are automatically taken in succession and each sample is separately analyzed for mole fraction of $CH_4$ (dry basis). Sampling intervals may be varied, for example by conventional timers in the range of about 5 to 55 minutes. The response time for each sample run is about 5—15, such as about 10 minutes. Signal $E_{13}$ representing the mole fraction of $CH_4$ (dry basis) in one sample of the cooled and cleaned effluent gas stream is provided to system control unit 101. Then in system control unit 101, a signal corresponding to the average mole fraction of $CH_4$ (dry basis) over a period of time, such as 10 to 210 minutes, say 15 to 45 minutes is determined. From this signal and signals corresponding to the other terms in Equation I, a signal representing the actual temperature in the reaction zone is determined in system control unit 101.

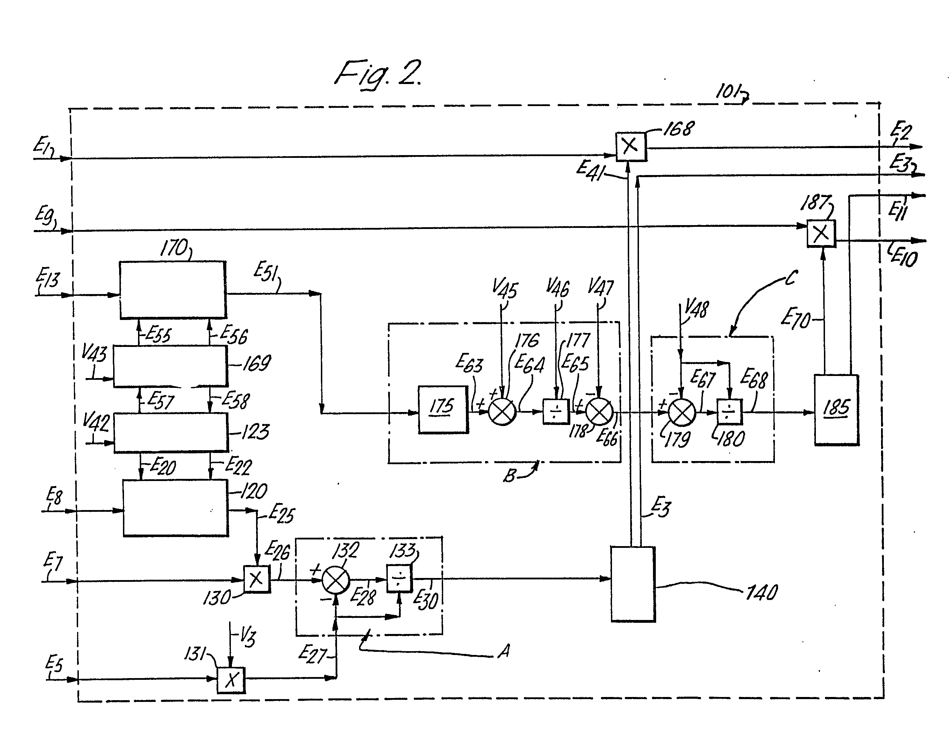

From signals $E_9$, $E_{13}$ and others to be described in connection with Fig. 2, system control unit 101 provides signal $E_{10}$ or $E_{11}$ depending on the magnitude of a value representing the relative difference between the actual and desired temperature in the reaction zone. The value for the relative difference between the actual and desired temperature in the reaction zone is determined by the following relationship: Actual Temperature−Desired Temperature divided by Desired Temperature. The value for the

7

desired temperature in the reaction zone may be determined by conventional calculations involving heat and weight balances and is dependent on such factors as the ash properties of the fuel, economics, and refractory life.

Signal $E_{10}$ corresponds to a specific trim adjustment to be made to the current flow rate for the temperature moderator i.e. $H_2O$ and is provided to a flow rate regulating means. For example, signal $E_{10}$ may adjust the set point of speed control 111 for pump 112 in water line 17. Speed control 111 provides signal $E_{16}$ to control pump 112 in order to increase or decrease the speed of pump 112. Alternatively, signal $E_{10}$ may be provided to reset a flow recorder-controller (not shown) which provides an adjustment signal to a control valve in the temperature moderator feedline. By this means the flow rate of the stream of temperature moderator in line 17 is automatically regulated a specific amount corresponding to a specific range of values representing the magnitude of the relative difference between the actual and desired temperature in the reaction zone. Thus for each adjustment, the flow rate of the temperature moderator in line 17 may be increased or decreased a specific small amount. For example, if water is the temperature moderator in line 17, by this means its flow rate may be adjusted in the range of about 0 to ±10 percent in predetermined small amounts.

Alarm signal $E_{11}$ from system control unit 101 corresponds to the relative difference between the actual and desired temperature in the reaction zone that is either higher or lower than a specific amount i.e. ±0.014. When signal $E_{11}$ is produced, the reaction zone temperature high-low level alarm 113 is actuated. For example, should there be called for a trim adjustment to the current water flow rate of a magnitude that exceeds plus or minus 10.0%, then said adjustment is not made but instead the high or low level alarm, respectively, will be actuated. The alarm may be visual, auditory, or both. By this means, the operator is alerted to adjust feedstream controls or to put equipment in or out of service for the following reasons: safety—to prevent costly damage to the equipment or harm to people; product—to operate the plant such that product specification is brought to the desired level and production rate targets are achieved; and efficiency—to operate the process economically.

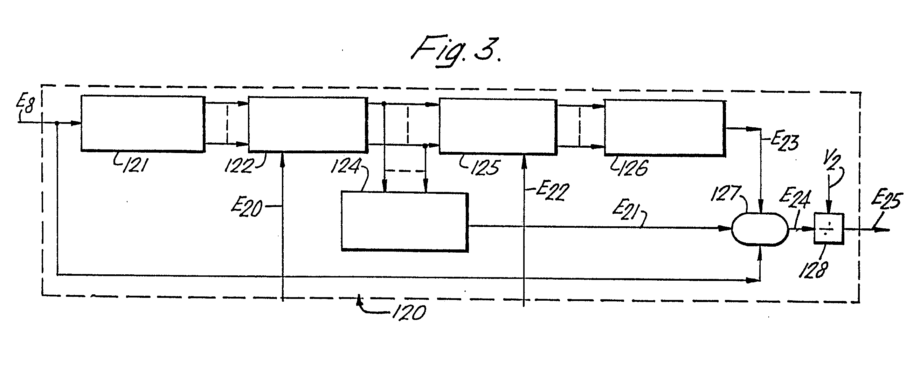

Referring to Figs. 1, 2 and 3, signal $E_8$ from carbon analyzer means 46 is provided to conventional type storage and averaging means 120, for example as shown in Fig. 3. Storage and averaging means 120 provides signal $E_{25}$ corresponding to the average of three successive determinations of the wt. fraction of carbon in the carbon-water dispersion in line 43 as determined by carbon analyzer means 46 in line 45 of Fig. 1.

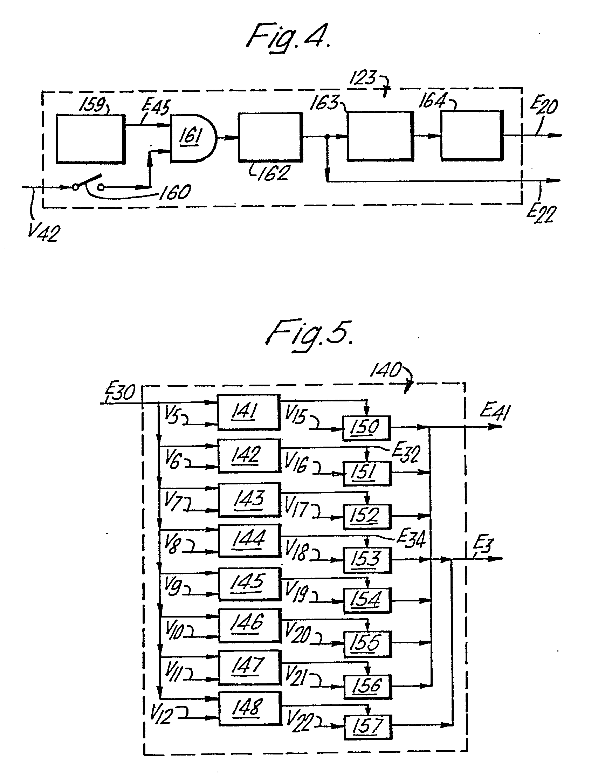

As shown in Fig. 3, storage and averaging means 120 includes a conventional type analog-to-digital converter 121 which converts the present signal $E_8$ to digital signals which are applied to register 122. The entering of the digital signals in register 122 is controlled by pulse signal $E_{20}$ from a conventional type programming means 123, for example as shown in Fig. 4. Register 122 provides digital signals to a digital-to-analog converter 124 which converts the digital signals to an analog signal $E_{21}$ corresponding to the wt. fraction of carbon in carbon-water dispersion for the next previous sample. Register 122 also provides the digital signals to another register 125. The entry of the digital signals into register 125 is controlled by a pulse $E_{22}$ provided by programming means 123 as hereinafter explained. Register 125 stores and provides the digital signals to another digital-to-analog converter 126 which converts the digital signals to an analog signal $E_{23}$ corresponding to the wt. fraction of carbon in the carbon-water dispersion for the second next previous sample. Gating and adding means 127 adds together signals $E_8$, $E_{21}$, and $E_{23}$ to provide a signal $E_{24}$. A divider 128 divides signal $E_{24}$ by direct current voltage $V_2$ corresponding to the number of sample runs which is 3 for the subject example to provide signal $E_{25}$.

Referring to Figs. 2, 3 and 4, programming means 123 receives a direct current voltage $V_{42}$. Voltage $V_{42}$ is applied to a conventional type on-off switch 160. Switch 160 may be activated automatically for example, by a signal from carbon analyzer 46 or programming means 169, or by an operator. When so activated voltage $V_{42}$ is applied to an AND gate 161. AND gate 161 is enabled by voltage $V_{42}$ from switch 160 and passes pulses $E_{45}$ from a conventionally programmed clock 159. The frequency of the pulses $E_{45}$ is related to the signals from the carbon analyzer and such variables as sampling interval, response time, and the moment in control cycle. Each passed pulse from AND gate 161 triggers a one-shot multivibrator 162 causing it to provide an output pulse $E_{22}$. Pulse $E_{22}$ precedes pulse $E_{20}$ so that it registers 125 in storage means 120. Register 125 can receive the contents of register 122 before the contents of register 122 are changed by the occurrence of a pulse $E_{20}$.

Another one-shot multivibrator 163 acts as a time delay so that the information in the register 122 does not change while they are being entered into register 125. The time delay is determined by the width of the pulse provided by one-shot 163. The trailing edge of that pulse triggers yet another one-shot multivibrator 164 to provide pulse $E_{20}$. Pulse $E_{20}$ enters all of the signals corresponding to sensed data into register 122 so that they may be stored for use as data for the next previous cycle during a next subsequent cycle.

Referring to Figures 1 and 2, signal $E_7$ from flow rate sensor 108 corresponds to the flow rate of carbon-water dispersion leaving the gas quenching and scrubbing zone. Multiplier 130 multiplies signal $E_7$ with signal $E_{25}$ to provide signal $E_{26}$ corresponding to a value which is directly related to the actual flow rate of the particulate carbon that is discharged from the gasifier. Signal $E_5$ from flow rate sensor 105 in line 23 corresponds to the flow rate of the liquid hydrocarbonaceous fuel feedstock to the gas generator. Multiplier 131 multiplies signal $E_5$ with a direct current voltage $V_3$ to provide a signal $E_{27}$ which corresponds to the desired carbon-make with units of, for example, lbs. per hr. ($(kg/s) \times 8 \times 10^3$). $V_3$ corresponds to a constant

8

representing the weight fraction of carbon in the liquid hydrocarbonaceous fuel times the desired weight fraction of the carbon in the liquid hydrocarbonaceous fuel feed to the reaction zone which is entrained as particulate carbon in the effluent gas stream leaving the reaction zone. $V_3$ may be a value in the range of 0.001 to 0.200, such as .005 to 0.100, say 0.010 to 0.03.

Signal means A provides signal $E_{30}$ representing the relative difference between the actual and desired amount of particulate carbon produced in the reaction zone for a specific period of time. Subtracting means 132 in signal means A subtracts signal $E_{27}$ representing the desired carbon-make from signal $E_{26}$ representing the actual carbon-make to provide signal $E_{28}$. A divider 133 divides signal $E_{28}$ by signal $E_{27}$ to provide signal $E_{30}$. Signal $E_{30}$ is provided to a conventional type comparator means 140.

Referring now to Fig. 5, comparator means 140, for example, represents a plurality of comparators 141—148 which receive signal $E_{30}$ and compare signal $E_{30}$ for a match with one of a plurality of direct current voltages from the group $V_5$ to $V_{12}$. $V_5$ to $V_{12}$ are manually or automatically inserted and correspond to a series of consecutive specific ranges of values (+ and −) for the relative difference between the actual and desired rate of free particulate carbon produced in the reaction zone. When a match between signal $E_{30}$ and one of the voltages $V_5$ to $V_{12}$ occurs, a corresponding signal is produced from the related comparator in the group 141—148. Switches 150 to 157 are associated with comparators 141—148 respectively. Direct current voltages $V_{15}$ to $V_{22}$ are associated with switches 150—157 respectively. $V_{15}$ to $V_{22}$ correspond to specific values (+ or −) for the % change to be made to the current flow rate of free-oxygen containing gas feedstream, or alternatively to a high-low level alarm signal. A signal from the comparator in the group 141—148 having a high output opens the related switch and the associated voltage passes. Thus with respect to the embodiment shown in Table I, signal $E_{32}$ from comparator unit 142 may represent a relative difference between the actual and desired rate of carbon produced of over +.05 to +.10, indicating an excess carbon-make and providing a high output to switch 151 of the bank of switches 150—157. Switch 151 is thereby rendered conductive and a direct current voltage $V_{16}$ corresponding to a specific % change of the current flow rate of free-oxygen containing gas in the amount of a +0.50% increment is passed as signal $E_{41}$. A multiplier 168 multiplies signal $E_{41}$ with signal $E_1$ representing the current flow rate of the free-oxygen containing gas to provide signal $E_2$ to flow recorder-controller 103 which provides signal $E_4$. Valve 102 in line 15 is then adjusted by signal $E_4$ to increase the flow rate of the free-oxygen containing gas feedstream by +0.50%. By this means, the actual carbon-make is reduced and brought closer to the desired carbon-make in the reaction zone.

In another example, the relative difference between the actual and desired rate of carbon produced is over +0.25 (indicating an excess carbon-make), comparator 144 has a high output, and signal $E_{34}$ is provided to switch 153. Switch 153 is thereby rendered conductive and a direct current voltage $V_{18}$ corresponding to a high level alarm signal is passed as signal $E_3$ to the free-oxygen containing gas high-low level alarm unit 104. The operator then takes steps to reduce the amount of particulate carbon being produced.

In one embodiment, comparator means 140 may be programmed as shown in Table I below.

TABLE I
Comparator means 140

| Comparator unit | Voltage | *Corresponding to the relative difference between actual and desired rate of C-prod. | Switch | Voltage | #Corresponding to the % change to be made to the current flow rate of free-$O_2$ gas |
|---|---|---|---|---|---|
| 141 | $V_5$ | up to +0.05 | 150 | $V_{15}$ | 0.0 |
| 142 | $V_6$ | over +0.05 to +0.10 | 151 | $V_{16}$ | +0.50 |
| 143 | $V_7$ | over +0.10 to +0.25 | 152 | $V_{17}$ | +1.5 |
| 144 | $V_8$ | over +0.25 | 153 | $V_{18}$ | High level alarm |
| 145 | $V_9$ | up to −0.05 | 154 | $V_{19}$ | 0.0 |
| 146 | $V_{10}$ | over −0.05 to −0.10 | 155 | $V_{20}$ | −0.50 |
| 147 | $V_{11}$ | over −0.10 to −0.25 | 156 | $V_{21}$ | −1.50 |
| 148 | $V_{12}$ | over −0.25 | 157 | $V_{22}$ | Low level alarm |

$$* \text{ Relative difference} = \frac{\text{Actual} - \text{desired rate of carbon production}}{\text{Desired rate of carbon production}}$$

# A plus sign indicates the specific adjustment will increase the current flow rate of the free-oxygen containing gas by the amount shown; and, a minus sign indicates the specific adjustment will decrease the current flow rate of the free-$O_2$ gas by the amount shown.

Referring again to Figs. 1 and 2 and the scheme for trim controlling the temperature moderator stream in order to monitor the temperature in the reaction zone, periodically a succession of signals $E_{13}$ from gas analyzer means 77 are automatically provided to conventional type storage and averaging means 170. The construction and operation of storage and averaging means 170 and 120 are similar. By this means three, for example, sequential signals $E_{13}$ representing three separate samples of gas analyzed for $CH_4$ may be handled in 170 in a manner similar to the way that three sequential signals $E_8$ representing three separate carbon determinations were handled in 120. Accordingly a drawing of storage and averaging means 170 would be redundant. Storage and averaging means 170 provides signal $E_{51}$, corresponding to the average of three successive determinations of mole % $CH_4$ (dry basis) in the cooled and cleaned effluent gas stream in line 52 made over a determined period of time.

The entry of the digital signals into the registers in 170 is controlled by conventional type programming means 169. Programming means 169 receives a direct current voltage $V_{43}$ and provides pulses $E_{55}$ and $E_{56}$. The construction and operation of programming means 169 is similar to that previously described for programming means 123 so that no additional drawing is required. In one embodiment, conventional program means connected to storage and averaging means 120 and 170, to carbon analyzer 46, and to gas analyzer 77 is employed for controlling the operation of the subject control system.

Signal Means B in Fig. 2 provides signal $E_{66}$ corresponding to the actual temperature (T) in the reaction zone as determined by Equation I. Signal $E_{51}$ corresponding to the average mole fraction $CH_4$ (dry basis) in the process gas stream is applied to natural logarithm function generator 175 which provides signal $E_{63}$ corresponding to the term $\log_e (CH_4)$ in Equation I. Adding means 176 adds signal $E_{63}$ and direct current voltage $V_{45}$ representing the constant B in Equation I to provide a signal $E_{64}$ corresponding to the denominator of Equation I. A divider 177 divides a direct current voltage $V_{46}$ representing the constant A in Equation I by signal $E_{64}$ to provide signal $E_{65}$. Subtracting means 178 subtracts a direct current voltage $V_{47}$ corresponding to a constant 460 from signal $E_{65}$ to provide signal $E_{66}$ corresponding to the term T in Equation I.

Signal Means C provides signal $E_{68}$ corresponding to the relative difference between the actual and desired temperatures in the reaction zone. Subtracting means 179 in Signal Means C subtracts direct current voltage $V_{48}$ corresponding to the desired temperature in the reaction zone in the range of 1700 to 3000°F (927 to 1649°C) say 2200° to 2800°F (1093 to 1538°C) from signal $E_{66}$ representing the actual temperature in the reaction zone to provide signal $E_{67}$. Direct current voltage $V_{48}$ is a manual or automatically computed and inserted input signal based on design conditions. A divider 180 divides $E_{67}$ by $V_{48}$ to provide signal $E_{68}$.

Comparator means 185 and 140 are similar in design and operation so that a new drawing is not required. Comparator means 185 comprises a plurality of comparators 250 to 257 which receives signal $E_{68}$ and compares it for a match with one of a plurality of direct current voltages from the group $V_{60}$ to $V_{67}$. $V_{60}$ to $V_{67}$ are manually or automatically inserted and correspond to a series of consecutive specific ranges of values (+ or −) for the relative difference between the actual and desired temperature. When a match between signal $E_{68}$ and one of the voltages $V_{60}$ to $V_{67}$ occurs, a corresponding signal is produced from the related comparator in the group 250 to 257 in the reaction zone. Switches 260 to 267 are associated with comparators 250 to 257 respectively. Direct current voltages $V_{70}$ to $V_{77}$ are associated with switches 260 to 267 respectively. $V_{70}$ to $V_{77}$ correspond to specific values (+ or −) of the % change to be made to the current flow rate of temperature moderator feedstream, or alternatively to a high-low level alarm signal.

Any signal leaving comparator means 185 to effect a change in the current flow rate of the temperature moderator by a specific percentage such as $E_{70}$ is multiplied in multiplier 187 by signal $E_9$ corresponding to the current flow rate of the temperature moderator feedstream as provided by conventional flow rate sensor 110. Signal $E_{10}$ is thereby provided for the adjustment of speed control 111 for pump 12 in line 17 of the process water feedstream. Alternatively, an alarm signal $E_{11}$ is passed to reaction zone temperature high-low level alarm unit 113 in Fig. 1. In one embodiment, comparator means 185 may be programmed as shown in Table II below. For example, signal $E_{68}$ from comparator unit 205 may represent a relative difference between the actual and desired temperatures of over −0.004 to −0.10, indicating a temperature in the reaction zone that is too low and providing a high output to switch 215 of the bank of switches 210—217. Switch 215 is thereby rendered conductive and a direct current voltage $V_{75}$ corresponding to a specific % change of the current flow rate of the temperature moderator feedstream in the decreased amount of −5.0% is passed as signal $E_{70}$. Signal $E_{10}$ to speed control 111 would then result in a reduction of the speed of pump 112 so as to reduce the current flow rate of the water feedstream by −5.0%. This would result in a corresponding increase of the actual temperature in the reaction zone.

## TABLE II
### Comparator means 185

| Comparator unit | Voltage | *Corresponding to the relative difference between actual and desired temperature | Switch | Voltage | #Corresponding to the % change to be made to the current flow rate of temperature moderator |
|---|---|---|---|---|---|
| 200 | $V_{60}$ | up to +0.004 | 210 | $V_{70}$ | 0.0 |
| 201 | $V_{61}$ | over +0.004 to +0.010 | 211 | $V_{71}$ | +5.0 |
| 202 | $V_{62}$ | over +0.010 to +0.014 | 212 | $V_{72}$ | +10.0 |
| 203 | $V_{63}$ | over +0.014 | 213 | $V_{73}$ | High level alarm |
| 204 | $V_{64}$ | up to −0.004 | 214 | $V_{74}$ | 0.0 |
| 205 | $V_{65}$ | over −0.004 to −0.010 | 215 | $V_{75}$ | −5.0 |
| 206 | $V_{66}$ | over −0.010 to −0.014 | 216 | $V_{76}$ | −10.0 |
| 207 | $V_{67}$ | over −0.014 | 217 | $V_{77}$ | Low level alarm |

$$* \text{ Relative difference} = \frac{\text{Actual} - \text{desired temperature in reaction zone}}{\text{Desired temperature in reaction zone}}$$

# A plus sign indicates the specific adjustment will increase the current flow rate of the temperature moderator by the amount shown; and, a minus sign indicates the specific adjustment will decrease the current flow rate by the amount shown.

Programming means 123 and 169 are linked together in one embodiment by signals $E_{57}$ and $E_{58}$. In such case programming means 123 is employed in the manner previously described and flow rate of the free-oxygen containing gas feedstream is adjusted. After conditions in the gas generator are allowed to stabilize for a first stabilization period in the range of about 5 to 30 minutes, such as 15 minutes, signal $E_{57}$ is provided to programming means 169 and the flow rate of the temperature moderator feedstream is adjusted in the manner described previously. After the gas generator is allowed to stabilize for a second stabilization period in the range of about 5 to 30 minutes, such as 15 minutes, signal $E_{58}$ is provided to programming means 123 and the trim control cycle is repeated with the adjustment of the flow rate of the

11

**0 082 634**

free-oxygen containing gas feedstream and the overall system control procedure is repeatedly cycled. During the stabilization period, the temperature, pressure, gas composition, and carbon-make in the reaction zone settle down to normal random fluctuations.

In still another embodiment, programming means 123 is programmed so that upon demand a small adjustment is made to the current flow rate of the free-oxygen containing gas in the manner described previously. The magnitude of each adjustment, if any, or alternatively the operation of a high-low level alarm is a function of the relative difference between the actual and desired carbon-make, in the manner described previously. A gasifier stabilization period in the range of about 5 to 30, such as 15 minutes follows each adjustment. The cycle is then repeated. In another embodiment the cycle for trim controlling the carbon make is repeated until the relative difference between the actual and desired carbon-make falls within a predetermined range, for example ±0.05. At that point and after the stabilization period, signal $E_{57}$ is provided to programming means 169 so that upon demand a small adjustment is made to the current flow rate of the temperature moderator feedstream in the manner described previously to trim control the temperature of the gasifier, the magnitude of the adjustment, if any, or alternatively the operation of a high-low level alarm is a function of the relative difference between the actual and desired temperature in the reaction zone. After a gasifier stabilization period in the range of about 5 to 30, such as 15 minutes, the trim control cycle for the free-oxygen containing gas feedstream is repeated, and the overall system control cycle is repeatedly cycled.

Although modifications and variations of the invention may be made without departing from the spirit and scope thereof, only such limitations should be imposed as are indicated in the appended claims.

**Claims**

1. A partial oxidation process for reacting a liquid hydrocarbonaceous fuel feedstream and a free-oxygen containing gas feedstream in the presence of a temperature moderator in the reaction zone of a refractory lined free-flow noncatalytic gas generator at a temperature in the range of 1700 to 3000°F (927 to 1649°C) and a pressure in the range of 1 to 300 atmospheres (1 to 304 bars) to produce an effluent gas stream comprising $H_2$, CO, $CH_4$, $CO_2$, particulate carbon and at least one material from the group consisting of $H_2O$, $H_2S$, COS, $N_2$, and Ar; and cleaning and cooling the effluent gas stream with water in a gas quenching and cleaning zone to remove substantially all of the entrained particulate carbon as a stream of carbon-water dispersion and to produce a cooled and cleaned effluent gas stream; characterised by a method for controlling the amount of unconverted particulate carbon in the effluent gas stream leaving the reaction zone comprising:

(1) periodically determining the flow rate of the feedstream of liquid hydrocarbonaceous fuel and generating a liquid hydrocarbonaceous fuel flow rate signal responsive thereto;

(2) automatically computing the desired rate of production for the unconverted particulate carbon produced in the reaction zone, in accordance with the signal generated in (1) and a direct current voltage corresponding to the weight fraction of carbon in said liquid hydrocarbonaceous fuel times the desired weight fraction of carbon in the liquid hydrocarbonaceous fuel feed which is entrained as particulate carbon in the effluent gas stream leaving the reaction zone, and generating a corresponding signal responsive thereto;

(3) periodically determining the flow rate for the stream of carbon-water dispersion, and generating a corresponding carbon-water dispersion flow rate signal responsive thereto;

(4) automatically sampling and analyzing over a period of time a plurality of samples of the stream of carbon-water dispersion in succession, and generating corresponding signals responsive thereto each successive signal representing the weight fraction of particulate carbon;

(5) automatically storing and computing the average of said plurality of the signals generated in (4), and generating a corresponding signal responsive thereto representing the average weight fraction of particulate carbon;

(6) automatically computing the actual rate of production for the unconverted particulate carbon produced in the reaction zone and recovered in the carbon-water dispersion in accordance with the signals generated in (3) and (5), and generating a corresponding signal responsive thereto;

(7) automatically computing the relative difference between the actual and desired rates of production of unconverted particulate carbon in accordance with the signals generated in (2) and (6), and generating a corresponding signal responsive thereto;

(8) periodically determining the flow rate for the feedstream of free-oxygen containing gas, and generating a corresponding free-oxygen containing gas flow rate signal responsive thereto;

(9) automatically comparing the signal generated in (7) for a match with one of a plurality of direct current voltages corresponding to a series of values (+ and −) representing the relative difference between the actual and desired rates of production of unconverted particulate carbon, and responsive thereto providing a related signal corresponding to the % change to be made in the current flow rate for the free-oxygen containing gas feedstream in order to bring closer the current and desired flow rates for the free-oxygen containing gas, or alternatively providing a particulate carbon high or low level alarm signal;

(10) automatically multiplying the signal from (9) corresponding to the % change to be made in the current flow rate for the free-oxygen containing gas feedstream by a signal corresponding to the current

12

flow rate for the free-oxygen containing gas feedstream to provide a signal to adjust the flow rate regulating means for the free-oxygen containing gas feedstream;

(11) automatically adjusting the flow rate of the free-oxygen containing gas feedstream, or alternatively actuating an alarm means in response to the signals generated in (10) or (9), respectively;

(12) stabilizing conditions in the reaction zone; and

(13) repeatedly cycling steps (1) to (12).

2. A process according to Claim 1 characterized by the following additional steps after step (12):

(13A) periodically determining the current flow rate of the feedstream of temperature moderator and generating a signal responsive thereto;

(14) automatically sampling and analyzing over a period of time a plurality of samples of the cooled and cleaned effluent gas stream in succession and generating corresponding signals responsive thereto each successive signal representing the mole fraction of $CH_4$ (dry basis);

(15) automatically storing and computing the average of said plurality of signals generated in (14), and generating a corresponding signal responsive thereto representing the average mole fraction of $CH_4$ (dry basis);

(16) automatically computing a value representing the actual temperature in the reaction zone of the gas generator as a function of the methane concentration from the signal generated in (15) and direct input signals representing constants; and generating a corresponding signal responsive thereto;

(17) automatically computing the relative difference between the actual temperature as represented by the value derived in (16) and the desired temperature in the reaction zone, and generating a corresponding signal responsive thereto in accordance with the signal generated in (16) and a manual or automatically computed input signal representing the desired temperature in the reaction zone;

(18) automatically comparing the signal generated in (17) for a match with one of a plurality of direct current voltages corresponding to a series of values (+ and −) representing the relative difference between the actual temperature as represented by the value derived in (16) and the desired temperature in the reaction zone, and responsive thereto providing a related signal corresponding to the % change to be made in the current flow rate for the temperature moderator feedstream in order to bring closer the current and desired flow rates for the temperature moderator feedstream; or alternatively providing a reaction zone temperature high-low level alarm signal;

(19) automatically multiplying the signal from (18) corresponding to the % change to be made in the current flow rate for the temperature moderator feedstream by a signal corresponding to the current flow rate for the temperature moderator feedstream from (13A) to provide a signal to adjust the flow rate regulating means for the temperature moderator feedstream;

(20) automatically adjusting the flow rate of the temperature moderator feedstream, or alternatively actuating an alarm means in response to the signals generated in (19) and (18), respectively;

(21) stabilizing conditions in the gas generator; and

(22) repeatedly cycling the overall system control procedure as previously specified for controlling the amount of unconverted carbon in the effluent gas stream in steps (1) to (12), followed by adjusting the temperature in the reaction zone by steps (13A) to (22).

3. A process of claim 2 characterised in that steps (1) to (13) are repeatedly recycled until the signal generated in step (7) corresponds to a value which falls within a predetermined range, prior to taking steps (13A) to (22).

4. A partial oxidation process for reacting a liquid hydrocarbonaceous fuel feedstream and a free-oxygen containing gas feedstream in the presence of a temperature moderator in the reaction zone of a refractory lined free-flow noncatalytic gas generator at a temperature in the range of 1700 to 3000°F (927 to 1649°C) and a pressure in the range of 1 to 300 atmospheres (1 to 304 bars) to produce an effluent gas stream comprising $H_2$, CO, $CH_4$, $CO_2$, particulate carbon and at least one material from the group consisting of $H_2O$, $H_2S$, COS, $N_2$ and Ar; and cleaning and cooling said effluent gas stream with water in a gas quenching and cleaning zone to remove substantially all of said entrained particulate carbon as a stream of carbon-water dispersion and to produce a cooled and cleaned effluent gas stream; characterised by a method for controlling the temperature in the reaction zone comprising:

(a) periodically determining the current flow rate of the feedstream of temperature moderator and generating a signal responsive thereto;

(b) automatically sampling and analysing over a period of time a plurality of samples of the cooled and cleaned effluent gas stream in succession, and generating corresponding separate sets of signals responsive thereto each successive set of signals representing the mole fraction $CH_4$ (dry basis);

(c) automatically storing and computing the average of the plurality of separate sets of signals generated in (b), and generating corresponding signals responsive thereto representing the average mole fraction of $CH_4$ (dry basis);

(d) automatically computing a value representing the actual temperature in the reaction zone of the gas generator as a function of the methane concentration from the signal generated in (c) and direct input signals representing constants; and generating a corresponding signal responsive thereto;

(e) automatically computing the relative difference between the actual temperature as represented by the value derived in (d) and the desired temperature in the reaction zone, and generating a corresponding

# 0 082 634

signal responsive thereto in accordance with the signal generated in (d) and a manual or automatically computed input signal representing the desired temperature in the reaction zone;

(f) automatically comparing the signal generated in (e) for a match with one of a plurality of direct current voltages corresponding to a series of values (+ and −) representing the relative difference between the actual temperature as represented by the value derived in (d) and the desired temperature in the reaction zone, and responsive thereto providing a related signal corresponding to the % change to be made in the current flow rate for the temperature moderator feedstream in order to bring closer the current and desired flow rates for the temperature moderator feed-stream; or alternatively providing a reaction zone temperature high-low level alarm signal;

(g) automatically multiplying the signal from (f) corresponding to the % change to be made in the current flow rate for the temperature moderator feedstream by a signal corresponding to the current flow rate for the temperature moderator feedstream from (a) to provide a signal to adjust the flow rate regulating means for the temperature moderator feedstream;

(h) automatically adjusting the flow rate of the temperature moderator feedstream, or alternatively actuating an alarm means in response to the signals generated in (g) and (f), respectively;

(i) stabilizing conditions in the gas generator; and

(j) repeatedly cycling the overall system control procedure as previously specified for adjusting the temperature in the reaction zone by steps (a) to (i).

5. A process according to Claim 1 characterized in that in step (9) the signal generated in (7) is compared for a match with direct current voltages corresponding to the values listed in the first column below, and responsive to said comparison a signal corresponding to the related value listed in the second column below is provided for that value in the first column that was matched:

| Relative difference between actual and desired rates of production of unconverted particulate carbon | % Change to be made in the current flow rate for the free-oxygen containing gas |
|---|---|
| up to +0.05 | 0.0 |
| over +0.05 to +0.10 | +0.50 |
| over +0.10 to +0.25 | +1.5 |
| over +0.25 | High level alarm |
| up to −0.05 | 0.0 |
| over −0.05 to −0.10 | −0.50 |
| over −0.10 to −0.25 | −1.50 |
| over −0.25 | Low level alarm |

6. A process according to Claim 2 characterized in that in step (18) the signal generated in (17) is compared for a match with direct current voltages corresponding to the values listed in the first column below and responsive to said comparison a signal corresponding to the related value listed in the second column below is provided for that value in the first column that was matched:

14

**0 082 634**

| Relative difference between the temperature derived in step (16) and the desired temperature in reaction zone | % Change to be made in the current flow rate for the temperature moderator |
|---|---|
| up to +0.004 | 0.0 |
| over +0.004 to +0.01 | +5.0 |
| over +0.01 to +0.014 | +10.0 |
| over +0.014 | High level alarm |
| up to −0.004 | 0.0 |
| over −0.004 to −0.01 | −5.0 |
| over −0.01 to −0.014 | −10.0 |
| over −0.014 | Low level alarm |

7. A process according to Claim 1 or 2 characterized in that in step (2) the signal generated in step (1) is multiplied by said direct current voltage corresponding to a constant having a value in the range of about 0.001 to 0.200.

8. A process according to Claim 1 or 2 characterized in that the adjustment signal from step (10) is provided directly to regulate a control valve in the free-oxygen containing gas feed line so that the rate of flow of the free-oxygen containing gas feedstream may be increased or decreased.

9. A process according to Claim 1 or 2 characterized by the steps of providing the adjustment signal from step (10) to reset a flow recorder-controller which provides an adjustment signal to regulate a control valve in the free-oxygen containing gas feed line so as to increase or decrease the rate of flow of the free-oxygen containing gas feedstream.

10. A process according to Claim 2 characterized by the setps of providing the adjustment signal from step (19) to a pump speed control means; and regulating the speed of a pump for the temperature moderator so as to increase or decrease the rate of flow of the temperature moderator feedstream in response to a signal provided by the speed control means.

11. A process according to Claim 1 or 2 characterized in that said liquid hydrocarbonaceous fuel is a liquid hydrocarbon selected from the group consisting of liquefied petroleum gas, petroleum distillates and residua, gasoline, naphtha, kerosine, crude petroleum, asphalt, gas oil, residual oil, tar-sand oil and shale oil, coal derived oil, aromatic hydrocarbons (such as benzene, toluene, xylene fractions), coal tar, cycle gas oil from fluid-catalytic-cracking operations, furfural extract of coker gas oil, and mixtures thereof.

12. A process according to Claim 1 or 2 characterized in that said liquid hydrocarbonaceous fuel is an oxygenated hydrocarbonaceous organic material from the group consisting of carbohydrates, cellulosic materials, aldehydes, organic acids, alcohols, ketones, oxygenated fuel oil, waste liquids and by-products from chemical processes for oxygenated hydrocarbonaceous organic materials, and mixtures thereof.

13. A process according to Claim 1 or 2 characterized in that said liquid hydrocarbonaceous fuel is a pumpable slurry of a low-ash solid carbonaceous fuel in a liquid carrier from the group consisting of water, liquid hydrocarbon fuel, and mixtures thereof.

14. A process according to Claim 13 characterized in that said solid carbonaceous fuel has an ash content of about 1.0 weight percent or less and is selected from the group consisting of coal, lignite, coke from coal, char from coal, coal liquefaction residues, particulate carbon, petroleum coke, solids derived from oil shale, tar sands and pitch, concentrated sewer sludge, bits of garbage, rubber, and mixtures thereof.

15. A process according to Claim 1 or 2 characterized in that said free-oxygen containing gas is selected from the group consisting of air, oxygen-enriched-air (22 mole % $O_2$ and higher) and substantially pure oxygen (95 mole % oxygen and higher).

16. A process according to Claim 1 or 2 characterized in that said temperature moderator is selected from the group consisting of $H_2O$, $CO_2$, $N_2$, a cooled portion of effluent gas from the gas generator, and mixtures thereof.

17. A partial oxidation system for reacting a liquid hydrocarbonaceous fuel feedstream and a free-oxygen containing gas feedstream in the presence of a temperature moderator in the reaction zone of a refractory lined free-flow noncatalytic gas generator at a temperature in the range of 927 to 1649°C (1700 to 3000°F) and a pressure in the range of 1—304 bars (1 to 300 atmospheres) to produce an effluent gas stream comprising $H_2$, CO, $CH_4$, $CO_2$, particulate carbon and at least one material from the group consisting of $H_2O$, $H_2S$, COS, $N_2$ and Ar; and cleaning and cooling the effluent gas stream with water in a gas

15

quenching and cleaning zone to remove substantially all of said entrained particulate carbon as a stream of carbon-water dispersion and to produce a cooled and cleaned effluent gas stream; characterized by a system for controlling the amount of unconverted particulate carbon in the effluent gas stream leaving the reaction zone comprising: means for automatically regulating the flow rate for the free-oxygen containing gas feedstream; means for automatically sensing the flow rates and providing signals corresponding to the flow rates for the stream of free-oxygen containing gas, the stream of liquid hydrocarbonaceous fuel and the stream of carbon-water dispersion; carbon analyzer means for automatically sampling, analyzing, and providing a plurality of successive signals each signal corresponding to the weight fraction of carbon present in each separate sample of a plurality of successive samples of said carbon-water dispersion being analyzed over a period of time; particulate carbon high-low level alarm; system control means connected to all of the flow-rate sensing means and to the carbon analyzer means for providing a first signal corresponding to a determined adjustment to the free-oxygen containing gas feedstream flow rate regulating means or alternatively for providing a second signal corresponding to a high or low level of carbon-make to the particulate carbon high-low level alarm in accordance with the signals from the liquid hydrocarbonaceous fuel feedstream and carbon water dispersion flow rate sensing means and the carbon analyzer means; said system control means includes a storage and averaging means connected to the carbon analyzer means for providing a signal corresponding to the average weight fraction of particulate carbon in accordance with the signals from the carbon analyzer means; means connected to the storage and averaging means and to the carbon-water dispersion flow rate sensing means for providing a signal corresponding to the actual carbon-make in said reaction zone; means for providing a signal representing the desired carbon-make in said reaction zone in accordance with the signals from the liquid hydrocarbonaceous fuel flow-rate sensing means and a signal corresponding to the product of the weight fraction of carbon in the liquid hydrocarbonaceous fuel and the desired weight fraction of carbon in the liquid hydrocarbonaceous fuel feed which is entrained as particulate carbon in the effluent gas stream leaving the reaction zone; signal means A for providing a signal corresponding to the relative difference between the actual and desired rates of production of unconverted particulate carbon in accordance with the actual and desired carbon-make signals; comparator means connected to signal means A for providing a first signal corresponding to the % change to be made in the current flow rate for the free-oxygen containing gas feedstream in order to bring closer the current and desired flow rates for the free-oxygen containing gas feedstream or alternatively for providing a second signal to the particulate carbon high or low level alarm in accordance with the signal from signal means A; means connected to the comparator means and to the free-oxygen containing gas feedstream sensing means for providing a signal to the free-oxygen containing gas flow rate regulating means when an adjustment to the flow rate of the free-oxygen containing gas is required in accordance with the first signal from the first comparator means and the signal from the free-oxygen containing gas sensing means; and programming means connected to the storage and averaging means for controlling its operation.

18. A system according to Claim 17 further characterized by a system for controlling the temperature in the reaction zone comprising: means for automatically regulating the flow rate of the temperature moderator feedstream; means for automatically sensing the flow rate of the temperature moderator feedstream and providing a corresponding signal; gas analyzer means for automatically sampling, analyzing, and providing a plurality of successive signals each signal corresponding to the mole fraction of $CH_4$ (dry basis) present in each separate sample of a plurality of successive samples of the cooled and cleaned effluent gas stream being analyzed over a period of time; reaction zone temperature high-low level alarm; system control means connected to the flow-rate sensing means for the temperature moderator feedstream and to the gas analyzer means for providing a first signal corresponding to a determined adjustment to the temperature moderator flow rate regulating means or alternatively for providing a second signal corresponding to a high or low level of temperature in the reaction zone to said temperature high-low level alarm in accordance with the signals from the temperature moderator flow rate sensing means, and the gas analyzer means; said system control means includes a storage and averaging means connected to the gas analyzer means for providing a signal corresponding to the average mole fraction of $CH_4$ (dry basis) in accordance with the signals from the gas analyzer means; first signal means connected to the storage and averaging means for providing a signal corresponding to the actual temperature in said reaction zone in accordance with the signals from the storage and averaging means and signals representing constants as provided by direct input signal means; second signal means connected to the first signal means for providing a signal corresponding to the relative difference between the actual and desired temperature in the reaction zone in accordance with a signal from the first signal means representing the actual temperature in the reaction zone and a signal from a direct input signal means representing the desired temperature; comparator means connected to said second signal means for providing a signal corresponding to the % change to be made in the current flow rate for the temperature moderator feedstream in order to bring closer the current and desired flow rates for the temperature moderator feedstream or alternatively for providing a signal to said reaction zone temperature high-low level alarm in accordance with the signal from said second signal means; means connected to the comparator means and to the temperature moderator flow rate sensing means for providing a signal to the temperature moderator flow rate regulating means when an adjustment to the flow rate of the temperature moderator is required in accordance with a signal from the comparator means and a signal from the temperature moderator flow rate sensing means; and programming means connected to the storage and averaging means for controlling its operation.

19. A partial oxidation system for reacting a liquid hydrocarbonaceous fuel feedstream and a free-oxygen containing gas feedstream in the presence of a temperature moderator in the reaction zone of a refractory lined free-flow noncatalytic gas generator at a temperature in the range of 1700 to 3000°F (927 to 1649°C) and a pressure in the range of 1 to 300 atmospheres (1 to 304 bars) to produce an effluent gas stream comprising $H_2$, CO, $CH_4$, $CO_2$, particulate carbon and at least one material from the group consisting of $H_2O$, $H_2S$, COS, $N_2$, and Ar; and cleaning and cooling the effluent gas stream with water in a gas quenching and cleaning zone to remove substantially all of the entrained particulate carbon as a stream of carbon-water dispersion and to produce a cooled and cleaned effluent gas stream; characterised by a system for controlling the temperature in the reaction zone comprising: means for automatically regulating the flow rate of the temperature moderator feedstream; means for automatically sensing the flow rate of the temperature moderator feedstream and providing a corresponding signal; gas analyser means for automatically sampling, analysing, and providing a plurality of successive signals each signal corresponding to the mole fraction of $CH_4$ (dry basis) present in each separate sample of a plurality of successive samples of the cooled and cleaned effluent gas stream being analysed over a period of time; reaction zone temperature high-low level alarm; system control means connected to the flow-rate sensing means for the temperature moderator feedstream and to the gas analyser means for providing a first signal corresponding to a determined adjustment to the temperature moderator flow rate regulating means or alternatively for providing a second signal corresponding to a high or low level of temperature in the reaction zone to said temperature high-low level alarm in accordance with the signals from the temperature moderator flow rate sensing means, and the gas analyser means; said system control means includes a storage and averaging means connected to the gas analyzer means for providing a signal corresponding to the average mole fraction of $CH_4$ (dry basis) in accordance with the signals from the gas analyzer means; first signal means connected to the storage and averaging means for providing a signal corresponding to the actual temperature in said reaction zone in accordance with the signals from the storage and averaging means and signals representing constants as provided by direct input signal means; second signal means connected to the first signal means for providing a signal corresponding to the relative difference between the actual and desired temperature in the reaction zone in accordance with a signal from the first signal means representing the actual temperature in the reaction zone and a signal from a direct input signal means representing the desired temperature; comparator means connected to said second signal means for providing a signal corresponding to the % change to be made in the current flow rate for the temperature moderator feedstream in order to bring closer the current and desired flow rates for the temperature moderator feedstream or alternatively for providing a signal to said reaction zone temperature high-low level alarm in accordance with the signal from said second signal means; means connected to the comparator means and to the temperature moderator flow rate sensing means for providing a signal to the temperature moderator flow rate regulating means when an adjustment to the flow rate of the temperature moderator is required in accordance with a signal from the comparator means and a signal from the temperature moderator flow rate sensing means; and programming means connected to the storage and averaging means for controlling its operation.

20. A system according to Claim 19 characterized in that the first signal means for providing a signal corresponding to the actual temperature in said reaction zone includes means for providing said signal in accordance with the following equation:

$$T = \frac{A}{B + Ln(CH_4)} - 460$$

where:

T is the actual temperature in the reaction zone (°F) ((°C)×9/5+32)

($CH_4$) is the average mole fraction of $CH_4$ (dry basis); and

A and B are constants.

21. A system according to Claim 20 characterized in that the liquid hydrocarbonaceous fuel is petroleum oil, the temperature moderator is $H_2O$, A=56,562.7, and B=20.295.

22. A system according to Claim 17 characterized in that the signal to the flow rate regulating means for the free-oxygen containing gas feedstream resets a flow recorder-controller means which provides an adjustment signal to regulate a control valve for the free-oxygen containing gas feedstream.

23. A system according to Claim 19 characterized in that the signal to the flow rate regulating means for the temperature moderator feedstream resets a speed control means which provides an adjustment signal to regulate the speed of a positive displacement pump for the temperature moderator feedstream.

## Patentansprüche

1. Partialoxidationsprozeß zur Umsetzung eines flüssigen Kohlenwasserstoffbrennstoff-Einsatzstroms mit einem freien Sauerstoff enthaltenden Gas-Einsatzstrom in Gegenwart eines Temperaturmoderators in

17

der Reaktionszone eines feuerfest ausgekleideten nichtkatalytischen Freistrom-Gaserzeugers bei einer Temperatur von 927—1649°C (1700—3000°F) und einem Druck von 1—304 bar (1—300 at) unter Erzeugung eines Abgasstroms, der $H_2$, CO, $CH_4$, $CO_2$, Kohlenstoffteilchen und wenigstens einen der Stoffe $H_2O$, $H_2S$, COS, $N_2$ oder Ar aufweist; und Reinigung und Abkühlung des Abgasstroms mit Wasser in einer Gasabschreck- und -reinigungszone zur Abscheidung im wesentlichen sämtlicher mitgeführten Kohlenstoffteilchen als Kohlenstoff-Wasser-Dispersionsstrom und Erzeugung eines abgekühlten und gereinigten Abgasstroms; gekennzeichnet durch ein Verfahren zur Regelung der Menge an nichtumgesetzten Kohlenstoffteilchen in dem die Reaktionszone verlassenden Abgasstrom, umfassend:

(1) periodisches Bestimmen des Durchsatzes des flüssigen Kohlenwasserstoffbrennstoff-Einsatzstroms und dementsprechendes Erzeugen eines Kohlenwasserstoffbrennstoff-Einsatzstrom-Durchsatzsignals;

(2) automatisches Berechnen der Soll-Produktionsgeschwindigkeit der in der Reaktionszone erzeugten nichtumgesetztn Kohlenstoffteilchen nach Maßgabe des in (1) erzeugten Signals und einer Gleichspannung entsprechend dem Gewichtsbruchteil an Kohlenstoff in dem flüssigen Kohlenwasserstoffbrennstoff, multipliziert mit dem Soll-Gewichtsbruchteil an Kohlenstoff in dem flüssigne Kohlenwasserstoffbrennstoff-Einsatz, der als Kohlenstoffteilchen in dem die Reaktionszone verlassenden Abgasstrom mitgeführt wird, und daraufhin Erzeugen eines entsprechenden Signals;

(3) periodisches Bestimmen des Durchsatzes des Kohlenstoff-Wasser-Dispersionsstroms und daraufhin Erzeugen eines entsprechenden Kohlenstoff-Wasser-Dispersionsstrom-Durchsatzsignals;

(4) automatische Entnahme und Untersuchung mehrerer aufeinanderfolgender Proben des Kohlenstoff-Wasser-Dispersionsstroms über einen Zeitraum und Erzeugen entsprechender Signale, wobei jedes aufeinanderfolgende Signal den Gewichtsbruchteil an Kohlenstoffteilchen darstellt;

(5) automatisches Speichern und Berechnen des Mittelwerts der in (4) erzeugten mehreren Signale und daraufhin Erzeugen eines entsprechenden Signals, das den gemittelten Gewichtsbruchteil an Kohlenstoffteilchen darstellt;

(6) automatisches Berechnen der Ist-Produktionsgeschwindigkeit der in der Reaktionszone erzeugten und in der Kohlenstoff-Wasser-Dispersion rückgewonnenen nichtumgesetzten Kohlenstoffteilchen nach Maßgabe der in (3) und (5) erzeugten Signale und daraufhin Erzeugen eines entsprechenden Signals;

(7) automatisches Berechnen der relativen Differenz zwischen der Ist- und der Soll-Produktionsgeschwindigkeit der nichtumgesetzten Kohlenstoffteilchen nach Maßgabe der in (2) und (6) erzeugten Signale und daraufhin Erzeugen eines entsprechenden Signals;

(8) periodisches Bestimmen des Durchsatzes des freien Sauerstoff enthaltenden Gas-Einsatzstroms und daraufhin Erzeugen eines entsprechenden Durchsatzsignals für das freien Sauerstoff enthaltende Gas;

(9) automatisches Vergleichen des in (7) erzeugten Signals auf Übereinstimmung mit einer von mehreren Gleichspannungen entsprechend einer Serie von Werten (+ und −), die die relative Differenz zwischen der Ist- und Soll-Produktionsgeschwindigkeit der nichtumgesetzten Kohlenstoffteilchen bezeichnen, und anschließendes Erzeugen eines zugeordneten Signals entsprechend der prozentualen Änderung, die in dem Ist-Durchsatz des freien Sauerstoff enthaltenden Gas-Einsatzsatzstroms vorzunehmen ist, um den Ist- und den Soll-Durchsatz des freien Sauerstoff enthaltenden Gases einander anzunähern, oder alternativ Erzeugung eines Kohlenstoffteilchen-Hochpegel- oder -Niedrigpegel-Warnsignals;

(10) automatisches Multiplizieren des Signals aus (9), das der im Ist-Durchsatz des freien Sauerstoff enthaltenden Gas-Einsatzstroms vorzunehmenden prozentualen Änderung entspricht, mit einem Signal, das dem Ist-Durchsatz des freien Sauerstoff enthaltenden Gas-Einsatzstroms entspricht, zur Bildung eines Signals zur Einstellung der Durchsatz-Regelvorrichtung für den freien Sauerstoff enthaltenden Gas-Einsatzstrom;

(11) automatisches Einstellen des Durchsatzes des freien Sauerstoff enthaltenden Gas-Einsatzstroms oder alternativ Aktivieren einer Warnvorrichtung aufgrund der in (10) bzw. (9) erzeugten Signale;

(12) Stabilisieren der Bedingungen in der Reaktionszone; und

(13) mehrfaches zyklisches Wiederholen der Schritte (1) bis (12).

2. Prozeß nach Anspruch 1, gekennzeichnet durch die folgenden weiteren Schritte anschließend an Schritt (12):

(13A) periodisches Bestimmen des Ist-Durchsatzes des Temperaturmoderator-Einsatzstroms und Erzeugen eines entsprechenden Signals;

(14) automatische Entnahme und Untersuchung einer Mehrzahl Proben des abgekühlten und gereinigten Abgasstroms in Aufeinanderfolge über einen Zeitraum und Erzeugen dementsprechender Signale, wobei jedes aufeinanderfolgende Signal den Molenbruch von $CH_4$ (Trockenbasis) darstellt;

(15) automatisches Speichern und Berechnen des Mittelwerts der mehreren in (14) erzeugten Signale und daraufhin Erzeugen eines entsprechenden Signals, das den gemittelten Molenbruch von $CH_4$ (Trockenbasis) darstellt;

(16) automatisches Berechnen eines die Ist-Temperatur in der Reaktionszone des Gaserzeugers beziechnenden Werts als Funktion der Methankonzentration aus dem in (15) erzeugten Signal und direkten Eingangssignalen, die Konstanten bezeichnen; und daraufhin Erzeugen eines entsprechenden Signals;

(17) automatisches Berechnen der relativ Differenz zwischen der Ist-Temperatur entsprechend dem in (16) abgeleiteten Wert und der Soll-Temperatur in der Reaktionszone und Erzeugen eines entsprechenden Signals nach Maßgabe des in (16) erzeugten Signals und eines manuell oder automatisch berechneten Eingangssignals, das die Soll-Temperatur in der Reaktionszone darstellt;

(18) automatisches Vergleichen des in (17) erzeugten Signals auf Übereinstimmung mit einer von mehreren Gleichspannungen entsprechend einer Serie von Werten (+ und −), die die relativ Differenz zwischen der Ist-Temperatur entsprechend dem in (16) abgeleiteten Wert und der Soll-Temperatur in der Reaktionszone bezeichnen, und daraufhin Erzeugen eines zugeordneten Signals entsprechend der im Ist-Durchsatz des Temperaturmoderator-Einsatzstroms vorzunehmenden prozentualen Änderung, um den Ist- und den Soll-Durchsatz des Temperaturmoderator-Einsatzstroms einander anzunähern; oder alternativ Erzeugen eines Reaktionszonentemperatur-Hoch- bzw. -Niedrigpegel-Warnsignals;

(19) automatisches Multiplizieren des Signals aus (18) entsprechend der im Ist-Durchsatz des Temperaturmoderator-Einsatzstroms vorzunehmenden prozentualen Änderung mit einem Signal entsprechend dem Ist-Durchsatz des Temperatur-moderator-Einsatzstroms aus (13A) unter Erzeugung eines Signals für die Einstellung der Durchsatz-Regelvorrichtung für den Temperatur-moderator-Einsatzstrom;

(20) automatisches Einstellen des Durchsatzes des Temperaturmoderator-Einsatzstroms oder alternativ Aktivieren einer Warnvorrichtung aufgrund der in (19) bzw. (18) erzeugten Signale;

(21) Stabilisieren der Bedingungen im Gaserzeuger; und

(22) mehrfaches zyklisches Wiederholen des Gesamtsystem-Regelvorgangs wie oben angegeben zur Einstellung der Menge an Kohlenstoffteilchen im Abgasstrom in den Schritten (1) bis (12), gefolgt durch Einstellen der Temperatur in der Reaktionszone durch die Schritte (13A) bis (22).

3. Prozeß nach Anspruch 2, dadurch gekennzeichnet, daß die Schritte (1) bis (13) mehrfach zyklisch wiederholt werden, bis das in Schritt (7) erzeugte Signal einem Wert entspricht, der in einen vorbestimmten Bereich fällt, bevor die Schritte (13A) bis (22) ausgeführt werden.

4. Partialoxidationsprozeß zur Umsetzung eines flüssigen Kohlenwasserstoffbrennstoff-Einsatzstroms mit einem freien Sauerstoff enthaltenden Gas-Einsatzstrom in Gegenwart eines Temperaturmoderators in der Reaktionszone eines feuerfest ausgekleideten nichtkatalytischen Freistrom-Gaserzeugers bei einer Temperatur von 927—1649°C (1700—3000°F) und einem Druck von 1—304 bar (1—300 at) unter Erzeugung eines Abgasstroms, der $H_2$, CO, $CH_4$, $CO_2$, Kohlenstoffteilchen und wenigstens einen der Stoffe $H_2O$, $H_2S$, COS, $N_2$ oder Ar aufweist; und Reinigung und Abkühlung des Abgasstroms mit Wasser in einer Gasabschreck- und -reinigungszone unter Abscheidung im wesentlichen sämtlicher mitgeführten Kohlenstoffteilchen als Kohlenstoff-Wasser-Dispersionsstrom und Erzeugung eines abgekühlten und gereinigten Abgasstroms; gekennzeichnet durch ein Verfahren zur Regelung der Temperatur in der Reaktionszone, umfassend:

(a) periodisches Bestimmen des Ist-Durchsatzes des Temperaturmoderator-Einsatzstroms und Erzeugen eines entsprechenden Signals;

(b) automatische Entnahme und Untersuchung einer Mehrzahl Proben des abgekühlten und gereinigten Gasstroms in Aufeinanderfolge über einen Zeitraum und daraufhin Erzeugen entsprechender gesonderter Signalssätze, wobei jeder aufeinanderfolgende Signalsatz den Molenbruch von $CH_4$ (Trockenbasis) darstellt;

(c) automatisches Speichern und Berechnen des Mittelwerts der in (b) erzeugten mehreren getrennten Signalsätze und daraufhin Erzeugen entsprechender Signale, die den gemittelten Molenbruch von $CH_4$ (Trockenbasis) darstellen;

(d) automatisches Berechnen eines die Ist-Temperatur in der Reaktionszone des Gaserzeugers bezeichnenden Werts als Funktion der Methankonzentration aus dem in (c) erzeugten Signal und direkten Eingangssignalen, die Konstanten bezeichen; und daraufhin Erzeugen eines entsprechenden Signals;

(e) automatisches Berechnen der relativen Differenz zwischen der Ist-Temperatur entsprechend dem in (d) abgeleiteten Wert und der Soll-Temperatur in der Reaktionszone und daraufhin Erzeugen eines entsprechenden Signals nach Maßgabe des in (d) erzeugten Signals und eines manuell oder automatisch berechneten Eingangssignals, das die Soll-Temperatur in der Reaktionszone angibt;

(f) automatisches Vergleichen des in (e) erzeugten Signals auf Übereinstimmung mit einer von mehreren Gleichspannungen entsprechend einer Serie von Werten (+ und −), die die relative Differenz zwischen der Ist-Temperatur entsprechend dem in (d) abgeleiteten Wert und der Soll-Temperatur in der Reaktionszone bezeichnen, und anschließendes Erzeugen eines zugeordneten Signals entsprechend der in dem Ist-Durchsatz des Temperaturmoderator-Einsatzstroms vorzunehmenden prozentualen Änderung, um den Ist- und den Soll-Durchsatz des Temperaturmoderator-Einsatzstroms einander anzunähern; oder alternativ Erzeugen eines Reaktionszonentemperatur-Hoch- bzw. -Niedrigpegel-Warnsignals;

(g) automatisches Multilpizieren des in (f) erhaltenen Signals entsprechend der im Ist-Durchsatz des Temperatur-moderator-Einsatzstroms vorzunehmenden prozentualen Änderung mit einem Signal entsprechend dem Ist-Durchsatz des Temperaturmoderator-Einsatzstroms aus (a) zur Erzeugung eines Signals zur Einstellung der Durchsatz-Regelvorrichtung für den Temperaturmoderator-Einsatzstrom;

(h) automatisches Einstellen des Durchsatzes des Temperaturmoderator-Einsatzstroms oder alternativ Aktivieren einer Warnvorrichtung aufgrund der in (g) bzw. (f) erzeugten Signale;

(i) Stabilisieren der Bedingungen im Gaserzeuger; und

(j) mehrfaches zyklisches Wiederholen des Gesamtsystem-Regelvorgangs wie vorstehend angegeben zur Regelung der Temperatur in der Reaktionszone durch die Schritte (a) bis (i).

5. Prozeß nach Anspruch 1, dadurch gekennzeichnet, daß in Schritt (9) das in (7) erzeugte Signal auf Übereinstimmung mit Gleichspannungen entsprechend den Werten in der nachstehenden ersten Spalte verglichen und aufgrund dieses Vergleichs ein Signal entsprechend dem zugeordneten, in der nachstehenden zweiten Spalte angegebenen Wert für denjenigen Wert in der ersten Spalte, für den Übereinstimmung besteht, erzeugt wird:

| relative Differenz zwischen Ist- und Soll-Produktions- geschwindigkeiten von nichtumgesetzten Kohlen- stoffteilchen | im Ist-Durchsatz des freien Sauerstoff enthaltenden Gases vorzunehmende prozen- tuale Änderung |
|---|---|
| bis zu +0,05 | 0,0 |
| über +0,05 bis +0,10 | +0,50 |
| über +0,10 bis +0,25 | +1,5 |
| über +0,25 | Hochpegel-Alarm |
| bis zu −0,05 | 0,0 |
| über −0,05 bis −0,10 | −0,50 |
| über −0,10 bis −0,25 | −1,50 |
| über −0,25 | Niedrigpegel-Alarm |

6. Prozeß nach Anspruch 2, dadurch gekennzeichnet, daß in Schritt (18) das in (17) erzeugte Signal auf Übereinstimmung mit Gleichspannungen entsprechend den in der nachstehenden ersten Spalte aufgeführten Werten verglichen und aufgrund dieses Vergleichs für denjenigen Wert der ersten Spalte, für den Übereinstimmung festgestellt wurde, ein Signal entsprechend dem in der nachstehenden zweiten Spalte aufgeführten zugeordneten Wert erzeugt wird:

| relative Differenz zwischen der in Schritt (16) abge- leiteten Temperatur und der Solltemperatur in der Reaktionszone | in dem Ist-Durchsatz des Temperaturmoderators vor- zunehmende prozentuale Änderung |
|---|---|
| bis zu +0,004 | 0,0 |
| über +0,004 bis +0,01 | +5,0 |
| über +0,01 bis +0,014 | +10,0 |
| über +0,014 | Hochpegel-Alarm |
| bis zu −0,004 | 0,0 |
| über −0,004 bis −0,01 | −5,0 |
| über −0,01 bis −0,014 | −10,0 |
| über −0,014 | Niedrigpegel-Alarm |

7. Prozeß nach Anspruch 1 oder 2, dadurch gekennzeichnet, daß in Schritt (2) das in Schritt (1) erzeugte Signal multipliziert wird mit der Gleichspannung entsprechend einer Konstanten, die einen Wert von ca. 0,001—0,200 hat.

8. Prozeß nach Anspruch 1 oder 2, dadurch gekennzeichnet, daß das Stellsignal aus Schritt (10) bereitgestellt wird zur direkten Regelung eines Stellventils in der Zufuhrleitung für das freien Sauerstoff enthaltende Gas, so daß der Durchsatz des freien Sauerstoff enthaltenden Gases erhöht oder verringert werden kann.

9. Prozeß nach Anspruch 1 oder 2, gekennzeichnet durch die Schritte der Bereitstellung des Stellsignals aus Schritt (10) zur Rückstellung eines Durchsatz-Registrierreglers, der ein Einstellsignal liefert zur

0 082 634

Einstellung eines Regelventils in der Zufuhrleitung des freien Sauerstoff enthaltenden Gases, um dadurch den Durchsatz des freien Sauerstoff enthaltenden Gas-Einsatzstroms zu erhöhen oder zu verringern.

10. Prozeß nach Anspruch 2, gekennzeichnet durch die Schritte der Bereitstellung des Einstellsignals aus Schritt (19) für eine Pumpengeschwindigkeits-Regelvorrichtung; und Regeln der Geschwindigkeit einer Pumpe für den Temperaturmoderator derart, daß der Durchsatz des Temperaturmoderator-Einsatzstroms nach Maßgabe eines von der Geschwindigkeits-Regelvorrichtung erzeugten Signals erhöht oder verringert wird.

11. Prozeß nach Anspruch 1 oder 2, dadurch gekennzeichnet, daß der flüssige Kohlenwasserstoffbrennstoff ein flüssiger Kohlenwasserstoff ist, der Flüssiggas, Erdöldestillate und -rückstände, Benzin, Naphtha, Kerosin, Rohöl, Asphalt, Gasöl, Rückstandsöl, Teersandöl und Schieferöl, Kohlenteeröl, Aromaten (wie Benzol-, Toluol-, Xylolfraktionen), Kohlenteer, Kreislaufgasöl aus katalytischen Wirbelschichtspaltungsverfahren, Furfurolextrakte von Kokergasöl oder Gemische derselben ist.

12. Prozeß nach Anspruch 1 oder 2, dadurch gekennzeichnet, daß der flüssige Kohlenwasserstoffbrennstoff ein oxidierter kohlenwasserstoffhaltiger organischer Stoff aus der Gruppe Kohlehydrate, Zellulosederivate, Aldehyde, organische Säuren, Alkohole, Ketone, oxidiertes Heizöl, Abfallflüssigkeiten und Nebenprodukte aus chemischen Prozessen zur Herstellung oxidierter kohlenwasserstoffhaltige organische Stoffe und Gemische derselben ist.

13. Prozeß nach Anspruch 1 oder 2, dadurch gekennzeichnet, daß der flüssige Kohlenwasserstoffbrennstoff eine pumpfähige Aufschlämmung eines kohlenstoffhaltigen Festbrennstoffs mit geringem Aschegehalt in einer Trägerflüssigkeit ist, wobei die Trägerflüssigkeit Wasser, flüssiger Kohlenwasserstoffbrennstoff oder Gemische derselben ist.

14. Prozeß nach Anspruch 13, dadurch gekennzeichnet, daß der kohlenstoffhaltige Festbrennstoff einen Aschegehalt von ca. 1,0 Gew.-% oder weniger hat und Steinkohle, Braunkohle, Steinkohlenkoks, Halbkoks, Kohleverflüssigungs-Rückstände, Kohlenstoffteilchen, Petrolkoks, aus Ölschiefer, Teersanden und Pech stammende Feststoffe, konzentrierter Klärschlamm, stückiger Abfall, Gummi oder Gemische derselben ist.

15. Prozeß nach Anspruch 1 oder 2, dadurch gekennzeichnet, daß das freien Sauerstoff enthaltende Gas Luft, mit Sauerstoff angereicherte Luft (22 Mol-% $O_2$ und mehr) oder im wesentlichen reiner Sauerstoff (95 Mol-% und höher) ist.

16. Prozeß nach Anspruch 1 oder 2, dadurch gekennzeichnet, daß der Temperaturmoderator $H_2O$, $CO_2$, $N_2$, ein abgekühlter Teil von Abgas aus dem Gaserzeuger oder Gemische derselben ist.

17. Partialoxidationseinrichtung zur Umsetzung eines flüssigen Kohlenwasserstoffbrennstoff-Einsatzstroms mit einem freien Sauerstoff enthaltenden Gas-Einsatzstrom in Gegenwart eines Temperaturmoderators in der Reaktionszone eines feuerfest ausgekleideten nichtkatalytischen Freistrom-Gaserzeugers bei einer Temperatur von 927—1649°C (1700—3000°F) und einem Druck von 1—304 bar (1—300 at) unter Erzeugung eines Abgasstroms, der $H_2$, CO, $CH_4$, $CO_2$, Kohlenstoffteilchen und wenigstens einen der Stoffe $H_2O$, $H_2S$, COS, $N_2$ oder Ar aufweist; und Reinigung und Abkühlung des Abgasstroms mit Wasser in einer Gasabschreck- und -reinigungszone zur Abscheidung im wesentlichen sämtlicher mitgeführten Kohlenstoffteilchen als Kohlenstoff-Wasser-Dispersionsstrom und Erzeugung eines abgekühlten und gereinigten Abgasstroms; gekennzeichnet durch ein System zur Regelung der Menge an nichtumgesetzten Kohlenstoffteilchen in dem die Reaktionszone verlassenden Abgasstrom, umfassend: Mittel zum automatischen Regeln des Durchsatzes des freien Sauerstoff enthaltenden Gas-Einsatzstroms; Mittel zur automatischen Erfassung der Durchsätze und Erzeugung von Signalen entsprechend den Durchsätzen des freien Sauerstoff enthaltenden Gasstroms, des flüssigen Kohlenwasserstoffbrennstoff-Stroms und des Kohlenstoff-Wasser-Dispersionsstroms; einen Kohlenstoffanalysator zur automatischen Probenentnahme, Analyse und Erzeugung einer Mehrzahl aufeinanderfolgender Signale, deren jedes dem Gewichtsbruchteil des Kohlenstoffs entspricht, der in jeder einzelnen Probe einer Mehrzahl aufeinanderfolgender Proben der analysierten Kohlenstoff-Wasser-Dispersion über einen Zeitraum vorhanden ist; eine Kohlenstoffteilchen-Hoch-Niedrigpegel-Alarmvorrichtung; eine Systemsteuerung, die an sämtliche Durchsatzfühler und den Kohlenstoffanalysator angeschlossen ist zur Erzeugung eines ersten Signals entsprechend einer vorbestimmten Einstellung der Durchsatz-Regelvorrichtung für den freien Sauerstoff enthaltenden Gas-Einsatzstrom oder alternativ zur Lieferung eines zweiten Signals entsprechend einem Hoch- oder Niedrigpegel der Kohlenstoffproduktion an die Kohlenstoffteilchen-Hoch-Niedrigpegel-Alarmvorrichtung nach Maßgabe der Signale der Durchsatzfühler für den flüssigen Kohlenwasserstoffbrennstoff-Einsatzstrom und den Kohlenstoff-Wasser-Dispersionsstrom und des Kohlenstoff-Analysators; wobei die Systemsteuerung eine Speicher- und Mittelungseinheit aufweist, die mit dem Kohlenstoff-Analysator verbunden ist zur Erzeugung eines Signals entsprechend dem mittleren Gewichtsbruchteil von Kohlenstoffteilchen nach Maßgabe der Signale des Kohlenstoff-Analysators; mit der Speicher- und Mittelungseinheit verbundene Mittel zur Erzeugung eines Signals, das der Ist-Kohlenstoffproduktion in der Reaktionszone entspricht; Mittel zur Erzeugung eines Signals, das die Soll-Kohlenstoffproduktion in der Reaktionszone nach Maßgabe der Signale des Durchsatzfühlers für den Flüssigkohlenwasserstoffbrennstoff-Einsatz und eines Signals, das dem Produkt des Gewichtsbruchteils an Kohlenstoff im flüssigen Kohlenwasserstoffbrennstoff und des Soll-Gewichtsbruchteils an Kohlenstoff in dem flüssigen Kohlenwasserstoffbrennstoff-Einsatzstrom, der als Kohlenstoffteilchen in dem die Reaktionszone verlassenden Abgasstrom mitgeführt wird, entspricht, darstellt; einen

21

Signalgeber A zur Erzeugung eines Signals entsprechend der relativen Differenz zwischen der ist- und der Soll-Produktionsgeschwindigkeit an nichtumgesetzten Kohlenstoffteilchen nach Maßgabe der Ist- und Soll-Kohlenstoffproduktions-Signale; einen Vergleicher, der mit dem Signalgeber A verbunden ist zur Erzeugung eines ersten Signals entsprechend der im Ist-Durchsatz des freien Sauerstoff enthaltenden Gas-Einsatzstroms vorzunehmenden prozentualen Änderung, um den Ist- und den Soll-Durchsatz des freien Sauerstoff enthaltenden Gas-Einsatzstroms einander anzunähern, oder alternativ zur Lieferung eines zweiten Signals an die Kohlenstoffteilchen-Hoch- oder -Niedrigpegel-Alarmvorrichtung nach Maßgabe des Ausgangssignals des Signalgebers A; mit dem Vergleicher und dem Fühler für den freien Sauerstoff enthaltenden Gas-Einsatzstrom verbundene Mittel zur Zuführung eines Signals zu der Durchsatz-Regelvorrichtung für das freien Sauerstoff enthaltende Gas, wenn eine Einstellung des Durchsatzes des freien Sauerstoff enthaltenden Gases nach Maßgabe des ersten Signals vom ersten Vergleicher und des Signals des Fühlers für den freien Sauerstoff enthaltenden Gasstrom erforderlich ist; und eine Programmiereinheit, die mit der Speicher- und Mittelungseinheit zur Steuerung der Operation derselben verbunden ist.

18. Einrichtung nach Anspruch 17, weiter gekennzeichnet durch ein System zur Regelung der Temperatur in der Reaktionszone, umfassend: Mittel zur automatischen Durchsatzregelung des Temperaturmoderator-Einsatzstroms; Mittel zum automatischen Erfassen des Durchsatzes des Temperaturmoderator-Einsatzstroms und Erzeugung eines entsprechenden Signals; einen Gasanalysator zur automatischen Probenentnahme, Untersuchung und Erzeugung einer Mehrzahl aufeinanderfolgender Signale, deren jedes dem Molenbruch von $CH_4$ (Trockenbasis) in jeder einzelnen Probe einer Mehrzahl aufeinanderfolgender über einen Zeitraum untersuchter Proben des abgekühlten und gereinigten Abgasstroms entspricht; eine Reaktionszonentemperatur-Hoch-Niedrigpegel-Alarmvorrichtung; eine Systemsteuerung, die mit dem Durchsatzfühler für den Temperaturmoderator-Einsatzstrom und mit dem Gasanalysator verbunden ist zur Lieferung eines ersten Signals entsprechend einer bestimmten Einstellung an die Durchsatzregelvorrichtung für den Temperaturmoderator, oder alternativ zur Lieferung eines zweiten Signals entsprechend einem Hoch- oder Niedrigtemperaturpegel in der Reaktionszone an die Temperatur-Hoch-Niedrigpegel-Alarmvorrichtung nach Maßgabe der Ausgangssignale des Durchsatzfühlers für den Temperaturmoderator und des Gasanalysators; wobei die Systemsteuerung aufweist eine an den Gasanalysator angeschlossene Speicher- und Mittelungseinheit, die ein Signal erzeugt, das dem gemittelten Molenbruch von $CH_4$ (Trockenbasis) nach Maßgabe der Signale des Gasanalysators entspricht; einen ersten mit der Speicher- und Mittelungseinheit verbundenen Signalgeber zur Erzeugung eines Signals entsprechend der Ist-Temperatur in der Reaktionszone nach Maßgabe der Signale von der Speicher- und Mittelungseinheit und von durch Direkteingangssignalmittel gelieferten, Konstanten entsprechenden Signalen; einen mit dem ersten Signalgeber verbundenen zweiten Signalgeber zur Erzeugung eines Signals enstprechend der relativen Differenz zwischen der Ist- und der Soll-Temperatur in der Reaktionszone nach Maßgabe eines Signals des ersten Signalgebers, das die Ist-Temperatur in der Reaktionszone angibt, und eines Signals von einer Direkteingangssignalvorrichtung, das die Soll-Temperatur bezeichnet; einen mit dem zweiten Signalgeber verbundenen Vergleicher, der ein Signal erzeugt, das der im Ist-Durchsatz des Temperaturmoderator-Einsatzstroms vorzunehmenden prozentualen Änderung zur Annäherung des Ist- und des Soll-Durchsatzes des Temperatur-moderator-Einsatzstroms entspricht, oder alternativ zur Lieferung eines Signals an die Reaktionszonentemperatur-Hoch-Niedrigpegel-Alarmvorrichtung nach Maßgabe des Signals des zweiten Signalgebers; mit dem Vergleicher und mit dem Durchsatzfühler für den Temperaturmoderator verbundene Mittel zur Lieferung eines Signals an die Durchsatz-Regelvorrichtung für den Temperaturmoderator, wenn eine Einstellung des Temperaturmoderator-Durchsatzes nach Maßgabe eines Signals vom Vergleicher und eines Signals vom Durchsatzfühler für den Temperaturmoderator erforderlich ist; und eine mit der Speicher- und Mittelungseinheit zu deren Steuerung verbundene Programmiereinheit.

19. Partialoxidationseinrichtung zur Umsetzung eines flüssigen Kohlenwasserstoffbrennstoff-Einsatzstroms mit einem freien Sauerstoff enthaltenden Gas-Einsatzstrom in Gegenwart eines Temperaturmoderators in der Reaktionszone eines feuerfest ausgekleideten nichtkatalytischen Freistrom-Gaserzeugers bei einer Temperatur von 927—1649°C (1700—3000°F) und einem Druck von 1—304 bar (1—300 at) unter Erzeugung eines Abgasstroms, der $H_2$, CO, $CH_4$, $CO_2$, Kohlenstoffteilchen und wenigstens einen der Stoffe $H_2O$, $H_2S$, COS, $N_2$ oder Ar aufweist; und Reinigung und Abkühlung des Abgasstroms mit Wasser in einer Gasabschreck- und -reinigungszone unter Abscheidung im wesentlichen sämtlicher mitgeführten Kohlenstoffteilchen als Kohlenstoff-Wasser-Dispersionsstrom und Erzeugung eines abgekühlten und gereinigten Abgasstroms; gekennzeichnet durch ein System zur Regelung der Temperatur in der Reaktionszone, umfassend: Mittel zur automatischen Durchsatzregelung des Temperaturmoderator-Einsatzstroms; Mittel zum automatischen Erfassen des Durchsatzes des Temperaturmoderator-Einsatzstroms und Erzeugung eines entsprechenden Signals; einen Gasanalysator zur automatischen Probenentnahme, Untersuchung und Erzeugung einer Mehrzahl aufeinanderfolgender Signale, deren jedes dem Molenbruch von $CH_4$ (Trockenbasis) in jeder einzelnen Probe einer Mehrzahl aufeinanderfolgender über einen Zeitraum untersuchter Proben des abgekühlten und gereinigten Abgasstroms entspricht; eine Reaktionszonentemperatur-Hoch-Niedrigpegel-Alarmvorrichtung; eine Systemsteuerung, die mit dem Durchsatzfühler für den Temperaturmoderator-Einsatzstrom und mit dem Gasanalysator verbunden ist zur Lieferung eines ersten Signals enstprechend einer bestimmten Einstellung an die Durchsatzregelvorrichtung für den Temperaturmoderator, oder alternativ zur Lieferung eines zweiten Signals entsprechend einem Hoch- oder Niedrigtemperaturpegel ein der Reaktionszone an die Temperatur-Hoch-Niedrigpegel-Alarm-vorrichtung nach Maßgabe der Signale des Durchsatzfühlers für den Temperaturmoderator und des Gasanalysators; wobei die Systemsteuerung aufweist eine an den Gasanalysator angeschlossene Speicher- und Mittelungseinheit, die in Signal erzeugt, das dem gemittelten Molenbruch von $CH_4$ (Trockenbasis) nach Maßgabe der Signale des Gasanalysators entspricht; einen ersten mit der Speicher- und Mittelungseinheit verbundenen Signalgeber zur Erzeugung eines Signals entsprechend der Ist-Temperatur in der Reaktionszone nach Maßgabe der Signale von der Speicher- und Mittelungseinheit und von durch Direkteingangssignalmittel gelieferten, Konstanten entsprechenden Signale; einen mit dem ersten Signalgeber verbundenen zweiten Signalgeber zur Erzeugung eines Signals entsprechend der relativen Differenz zwischen der ist- und der Soll-Temperatur in der Reaktionszone nach Maßgabe eines Signals des ersten Signalgebers, das die Ist-Temperatur in der Reaktionszone bezeichnet, und eines Signals von einer Direkteingangssignalvorrichtung, das die Soll-Temperatur bezeichnet; einen mit dem zweiten Signalgeber verbundenen Vergleicher, der ein Signal erzeugt, das der im Ist-Durchsatz des Temperaturmoderator-Einsatzstroms vorzunehmenden prozentualen Änderung zur Annäherung des Ist- und des Soll-Durchsatzes des Temperaturmoderator-Einsatzstroms entspricht, oder alternativ zur Lieferung eines Signals an die Reaktionszonentemperatur-Hoch-Niedrigpegel-Alarmvorrichtung nach Maßgabe des Signals des zweiten Signalgebers; mit dem Vergleicher und mit dem Durchsatzfühler für den Temperaturmoderator verbundene Mittel zur Lieferung eines Signals an die Durchsatz-Regelvorrichtung für den Temperaturmoderator, wenn einen Einstellung des Temperaturmoderator-Durchsatzes nach Maßgabe eines Signals vom Vergleicher und eines Signals vom Durchsatzfühler für den Temperaturmoderator erforderlich ist; und eine mit der Speicher- und Mittelungseinheit zu deren Steuerung verbundene Programmiereinheit.

20. Einrichtung nach Anspruch 19, dadurch gekennzeichnet, daß der erste Signalgeber zur Erzeugung eines der Ist-Temperatur in der Reaktionszone entsprechenden Signals Mittel aufweist zur Erzeugung des Signals nach Maßgabe der folgenden Gleichung:

$$T = \frac{A}{B + Ln(CH_4)} - 460$$

mit

T=Ist-Temperatur in der Reaktionszone (°F) ((°C)×9/5+32),
$(CH_4)$=gemittelter Molenbruch von $CH_4$ (Trockenbasis), und
A und B=Konstanten.

21. Einrichtung nach Anspruch 20, dadurch gekennzeichnet, daß der flüssige Kohlenwasserstoffbrennstoff Öl aus Erdöl, der Temperaturmoderator $H_2O$, A=56.562,7 und B=20,295 ist.

22. Einrichtung nach Anspruch 17, dadurch gekennzeichnet, daß das Signal zur Durchsatz-Regelvorrichtung für den freien Sauerstoff enthaltenden Gas-Einsatzstrom einen Durchsatz-Registrierregler rücksetzt, der ein Stellsignal zur Einstellung eines Regelventils für den freien Sauerstoff enthaltenden Gas-Einsatzstrom erzeugt.

23. Einrichtung nach Anspruch 19, dadurch gekennzeichnet, daß das Signal zur Durchsatz-Regelvorrichtung für den Temperaturmoderator-Einsatzstrom einen Geschwindigkeitsregler rücksetzt, der ein Stellsignal erzeugt zur Regelung der Geschwindigkeit einer Verdrängerpumpe für den Temperaturmoderator-Einsatzstrom.

## Revendications

1. Procédé d'oxydation partielle pour faire réagir un courant d'alimentation en combustible hydrocarboné liquide et un courant d'alimentation en gaz contenant de l'oxygène libre, en présence d'un modérateur de température dans une zone réactionnelle d'un générateur de gaz non catalytique à écoulement libre, revêtu d'un réfractaire, à une température dans la gamme de 927 à 1649°C, et sous une pression allant de 1 à 304 bars, pour produire un courant d'effluent gazeux constitué de $H_2$, CO, $CH_4$, $CO_2$, de carbone particulaire et d'au moins une substance appartenant au groupe constitué par $H_2O$, $H_2S$, COS, $N_2$ et Ar; et pour épurer et refroidir le courant d'effluent gazeux avec de l'eau dans une zone de refroidissement brusque et de lavage des gaz, pour éliminer la quasi totalité du carbone particulaire entraîné sous forme d'un courant de dispersion carbone-eau, et pour produire un courant d'effluent gazeux refroidi et lavé; caractérisé par un procédé de régulation de la quantité de carbone particulaire non converti dans le courant d'effluent gazeux quittant la zone réactionnelle, consistant à:

(1) déterminer périodiquement le débit du courant d'alimentation en combustible hydrocarboné liquide et générer un signal représentatif du débit de combustible hydrocarboné liquide;

(2) calculer automatiquement le taux souhaité de production de carbone particulaire non converti produit dans la zone réactionnelle, en fonction du signal généré en (1) et d'une tension continue correspondant à la fraction pondérale de carbone dans ce combustible hydrocarboné liquide, multilpié par la fraction pondérale souhaitée de carbone dans le courant d'alimentation en combustible hydrocarboné

**0 082 634**

liquide, qui est entraîné sous forme de carbone particulaire dans le courant d'effluent gazeux quittant la zone réactionnelle, et pour générer un signal correspondant, représentatif de cette grandeur.

(3) déterminer périodiquement le débit du courant de dispersion carbone-eau et générer un signal correspondant, représentatif du débit de dispersion carbone-eau.

(4) échantillonner et analyser automatiquement sur une certaine période de temps, un ensemble d'échantillons successifs de la dispersion carbone-eau, et générer des signaux correspondants, chaque signal successif représentant la fraction pondérale de carbone particulaire;

(5) stocker et calculer automatiquement la moyenne de cet ensemble de signaux générés en (4) et générer un signal correspondant représentant la fraction pondérale moyenne de carbone particulaire.

(6) calculer automatiquement le taux réel de production de carbone particulaire non converti produit dans la zone réactionnelle et recueilli dans la dispersion carbone-eau, en fonction des signaux générés en (3) et en (5), et générer un signal correspondant;

(7) calculer automatiquement la différence relative entre les taux réel et souhaité de production de carbone particulaire non converti, en fonction des signaux générés en (2) et en (6), et générer un signal correspondant;

(8) déterminer périodiquement le débit du courant d'alimentation en gaz contenant de l'oxygène libre, et généner un signal correspondant, représentatif du débit de gaz contenant de l'oxygène;

(9) comparer automatiquement le signal généré en (7) pour vérifier sa correspondance avec l'une d'un ensemble de tensions continues correspondant à une série de valeurs (+ et −) représentant la différence relative entre les taux réel et souhaité de production de carbone particulaire non converti, et en réponse à ces signaux, fournir un signal correspondant au pourcentage de variations à faire subir au débit instantané du courant d'alimentation en gaz contenant de l'oxygène libre, pour rapprocher l'un de l'autre les débits instanté et souhaité de gaz contenant de l'oxygène libre, ou en variante, fournir un signal d'alarm indicateur d'un niveau élevé ou faible de carbone particulaire;

(10) multiplier automatiquement le signal provenant de (9) correspondant au pourcentage de variations à faire subit au débit instanté du courant d'alimentation en gaz contenant de l'oxygène libre, par un signal correspondant au débit instantané du courant d'alimentation en gaz contenant de l'oxygène libre, pour fournir un signal servant à ajuster un dispositif de régulation du débit de gaz contenant de l'oxygène libre;

(11) ajuster automatiquement le débit du courant d'alimentation en gaz contenant de l'oxygène libre, ou en variante, actionner un dispositif d'alarme en réponse aux signaux génénres en (10) ou en (9), respectivement;

(12) laisser se stabiliser les conditions régnant dans la zone réactionnelle; et

(13) répéter de façon cyclique les opérations (1) à (12).

2. Procédé selon la revendication 1, caractérisé par les opérations supplémentaires suivantes après l'opération (12):

(13a) déterminer périodiquement le débit instantané du courant d'alimentation en modérateur de température et générer un signal correspondant à cette grandeur;

(14) échantillonner et analyser automatiquement sur une certaine période de temps, plusieurs échantillons consécutifs du courant d'effluent gazeux refroidi et lavé, et générer des signaux correspondant à ces grandeurs, chaque signal successif représentant la fraction molaire de $CH_4$ (base sèche);

(15) stocker et calculer automatiquement la valeur de cet ensemble de signaux générés en (14), et générer un signal correspondant à cette grandeur et représentant la fraction molaire moyenne de $CH_4$ (base sèche);

(16) calculer automatiquement une valeur représentant la température réelle dans la zone réactionnelle de générateur de gaz, en fonction de la concentration en méthane, à partir du signal généré en (15) et de signaux d'entrée directs représentant des constantes, et générer un signal correspondant à ces grandeurs;

(17) calculer automatiquement la différence relative entre la température réelle telle qu'elle est représentée par la valeur calculée en (16) et la valeur souhaitée dans la zone réactionnelle, et générer un signal correspondant à cette grandeur, en fonction du signal généré en (16) et d'un signal d'entrée calculé manuellement ou automatiquement représentant la températur souhaitée dans la zone réactionnelle;

(18) comparer automatiquement le signal généré en (17) pour vérifier sa correspondance avec l'une d'un ensemble de tensions continues correspondant à une série de valeurs (+ et −) représentant la différence relative entre la température réelle telle qu'elle est représentée par la valeur calculée en (16) et la température souhaitée dans la zone réactionnelle, en fournissant un signal associé correspondant au pourcentage de variations à faire subir au débit instantané du modérateur de température, pour rapprocher l'un de l'autre les débits instantané et souhaité du modérateur de température; ou en variante, fournir un signal d'alarme de niveau élevé ou faible de la température de la zone réactionnelle;

(19) multiplier automatiquement le signal provenant de (18) correspondant au pourcentage de variations à faire subit au débit instantané du modérateur de température, par un signal correspondant au débit instantané du modérateur de température déterminé en (13a), pour founir un signal servant à ajuster un dispositif de régulation du débit du modérateur de température;

(20) ajuster automatiquement le débit du courant d'alimentation en modérateur de température, ou en variante, actionner un dispositif d'alarme en réponse aux signaux générés en (19) et en (18), respectivement;

24

(21) stabiliser les conditions régnant dans le générateur de gaz; et

(22) répéter de façon cyclique l'opération de commande du système total, comme déjà indiqué, pour réguler la quantité de carbone non converti dans le courant d'effluent gazeux dans les opération (1) à (12), suivi par l'ajustement de la température dans la zone réactionnelle selon les opérations (13a) à (22).

3. Procédé selon la revendication 2, caractérisé en ce que les opération (1) à (13) sont répétées de façon cyclique jusqu'à ce que le signal généré à l'opération (7) corresponde à une valeur appartenant à une gamme prédéterminée, avant d'entreprendre les opérations (13a) à (22).

4. Procédé d'oxydation partielle pour faire réagir un courant d'alimentation en combustible hydrocarboné liquide et un courant d'alimentation en gaz contenant de l'oxygène libre, en présence d'un modérateur de température dans la zone réactionnelle d'un générateur de gaz non catalytique à écoulement libre, revêtu d'un réfractaire, à une température dans la gamme de 927 à 1649°C et sous une pression de 1 à 304 bars, pour produire un courant d'effluent gazeux comprenant du $H_2$, CO, $CH_4$, $CO_2$, du carbone particulaire et au moins une substance du groupe constitué par $H_2O$, $H_2S$, COS, $N_2$ et Ar; et laver et refroidir ce corant d'effluent gazeux avec de l'eau dans une zone de refroidissement brusque de lavage des gaz, pour éliminer la quasi totalité de ce carbone particulaire entraîné, sous forme d'un courant de dispersion carbone-eau, et pour produire un courant d'effluent gazeux refroidi et lavé; caractérisé par un procédé de régulation de la température de la zone réactionnelle consistant à:

(a) déterminer périodiquement le débit instantané du courant d'alimentation en modérateur de température et générer un signal correspondant à cette grandeur;

(b) échantillonner et analyser automatiquement sur une certaine période de temps, un ensemble d'échantillons successifs du courant d'effluent gazeux refroidi et lavé, et générer des ensembles séparés correspondants de signaux, chaque ensemble successif de signaux représentant la fraction molaire de $CH_4$ (base sèche);

(c) stocker et calculer automatiquement la moyenne des plusieurs ensembles séparés de signaux générés en (b), et générer des signaux correspondants, représentant la fraction molaire moyenne de $CH_4$ (base sèche);

(d) calculer automatiquement une valeur représentant la température réelle dans la zone réactionnelle du générateur de gaz, en fonction de la concentration en méthane, à partir du signal généré en (c) et de signaux d'entrée continus, représentant des constantes; et générer un signal correspondant;

(e) calculer automatiquement la différence relative entre la température réelle, telle qu'elle est représentée par la valeur calculée en (d) et la température souhaitée dans la zone réactionnelle, et générer un signal correspondant à cette grandeur en fonction du signal généré en (d) et d'un signal d'entrée calculé manuellement ou automatiquement représentant la température souhaitée dans la zone réactionnelle;

(f) comparer automatiquement le signal généré en (e) pour vérifier sa correspondance avec l'une de plusieurs tensions continues correspondant à une valeur (+ et −) représentant la différence relative entre la température réelle telle qu'elle est représentée par la valeur calculée (d), et la température souhaitée dans la zone réactionnelle, et répondant à ces grandeurs, en fournissant un signal associé correspondant au pourcentage de variations à faire subir au débit instantané du courant d'alimentation en modérateur de température, pour rapprocher l'un de l'autre les débits instantané et souhaité du modérateur de température, ou en variante, fournir un signal d'alarme indicateur d'un niveau élevé ou faible de la température dans la zone réactionnelle;

(g) multiplier automatiquement le signal provenant de (f) correspondant au pourcentage de variations à faire subir au débit instantané du modérateur de température, par un signal correspondant au débit instantané du modérateur de température déterminé en (a), pour fournir un signal servant à ajuster un dispositif régulateur du débit du modérateur de température;

(h) ajuster automatiquement le débit du courant d'alimentation en modérateur de température, ou en variante, actionner un dispositif d'alarem en réponse aux signaux générés en (g) et en (f), respectivement;

(i) laisser se stabiliser les conditions régnant dans le générateur de gaz; et

(j) répéter de façon cyclique l'opération de commande du système total, comme déjà indiqué pour l'ajustement de la température dans la zone réactionnelle, selon les opérations (a) à (i).

5. Procédé selon la revendication 1, caractérisé en ce que dans l'opération (9), le signal généré en (7) est comparé à des tensions continues correspondant aux valeurs énumérées dans la première colonne ci-après, et en réponse à cette comparaison, un signal correspondant à la valeur associée énumérée dans la seconde colonne ci-dessous, est fourni pour cette valeur dans la première colonne où une correspondance a été trouvée:

# 0 082 634

| Différence relative entre les taux réel et souhaité de production de carbone particulaire non converti | % de variations à faire subir au débit instantané du gaz contenant de l'oxygène libre |
|---|---|
| jusqu'à +0,05 | 0,0 |
| de +0,05 à +0,10 | +0,50 |
| de +0,10 à +0,25 | +1,5 |
| plus de +0,25 | alarme de niveau élevé |
| jusqu'à −0,05 | 0,0 |
| de −0,05 à −0,10 | −0,50 |
| de −0,10 à −0,25 | −1,50 |
| moins de −0,25 | alarme de niveau faible |

6. Procédé selon la revendication 2, caractérisé en ce que dans l'opération (18), le signal généré en (17) est comparé avec des tensions continues correspondant aux valeurs énumérées dans la colonne ci-après et, en ce qu'en réponse à cette comparaison, un signal correspondant à la valeur associée indiquée dans la seconde colonne ci-dessous, est fourni pour la valeur dans la première colonne pour laquelle une concordance a été trouvée:

| Différence relative entre la température calculée en (16) et la température souhaitée dans la zone réactionnelle | % de variations à faire subir au débit instantané du modérateur de température |
|---|---|
| jusqu'a +0,004 | 0,0 |
| de +0,004 à +0,01 | +5,0 |
| de +0,01 à +0,014 | +10,0 |
| plus de +0,014 | alarme de niveau élevé |
| jusqu'à −0,004 | 0,0 |
| de −0,004 à −0,01 | −5,0 |
| de −0,01 à −0,014 | −10,0 |
| moins de −0,014 | alarme de niveau faible |

7. Procédé selon la revendication 1 ou 2, caractérisé en ce que dans l'opération (2), le signal généré dans l'opération (1) est multiplié par cette tension continue correspondant à une constante ayant une valeur allant d'environ 0,001 à 0,200.

8. Procédé selon la revendication 1 ou 2, caractérisé en ce que le signal d'ajustement provenant de l'opération (10) est fourni directement pour réguler un clapet de commande dans la canalisation d'alimentation en gaz contenant de l'oxygène libre, de façon à ce que le débit de gaz contenant de l'oxygène libre puisse être augmenté ou diminué.

9. Procédé selon la revendication 1 ou 2, caractérisé par les opérations consistant à fournir le signal d'ajustment provenant de l'opération (10) pour réinitialiser un enregistreur-régulateur de débit qui fournit un signal d'ajustment pour réguler un clapet de commande situé dans une canalisation d'alimentation en gaz contenant de l'oxygène libre de façon à augmenter ou diminuer le débit du courant d'alimentation en gaz contenant de l'oxygène libre.

10. Procédé selon la revendication 2, caractérisé par les opérations consistant à fournir le signal d'ajustement provenant de l'opération (19) à un dispositif de commande de vitesse d'une pompe; et à réguler la vitesse d'une pompe servant au pompage du modérateur de température, de façon à augmenter

26

ou à diminuer le débit du modérateur de température en réponse à un signal fourni par le dispositif de commande de vitesse.

11. Procédé selon la revendication 1 ou 2, caractérisé en ce que ce combustible hydrocarboné liquide est un hydrocarbure liquide choisi parmi du gaz de pétrole liquéfié, des distillats et des résidus de pétrole, l'essence, le naphta, le kérosène, le pétrole brut, l'asphalte, le gasoil, une huile résiduelle, une huile de sable bitumineux et une huile de schiste, une huile dérivée de la houille, des hydrocarbures aromatiques (tels que des fractions de benzène, de toluène, de xylène) du goudron, du gasoil de recyclage provenant d'opérations de craquage catalytique fluide, un extrait furfuralique de gasoil de cokéfaction, et leurs mélanges.

12. Procédé selon la revendication 1 ou 2, caractérisé en ce que ce combustible hydrocarboné liquide est une substance organique hydrocarbonique oxygénée appartenant au groupe constitué par les hydrates de carbone, les matières cellulosiques, des aldéhydes, des acides organiques, des alcools, des cétones, du fuel oxygéné, des déchets liquides et des sous-produits résultant de traitements chimiques de matières organiques hydrocarbonées oxygénées et leurs mélanges.

13. Procédé selon la revendication 1 ou 2, caractérisé en ce que le combustible hydrocarboné est une bouillie pompable d'un combustible carboné solide à faible teneur en cendres, contenue dans un véhicule liquide appartenant au groupe constitué par l'eau, un combustible hydrocarboné liquide, et leurs mélanges.

14. Procédé selon la revendication 13, caractérisé en ce que ce combustible carboné solide a une teneur en cendres d'environ 1,0% en poids ou moins et est choisi parmi la houille, la lignite, le coke de houille, des résidus de carbonisation du charbon, des résidus de liquéfaction du charbon, du carbone particulaire, du coke de pétrole, des solides dérivés de schiste bitumineux, de sables bitumineux et de bitume, une boue concentrée d'égouts, des ordures, de caoutchouc et leurs mélanges.

15. Procédé selon la revendication 1 ou 2, caractérisé en ce que ce gaz contenant de l'oxygène libre est choisi parmi l'air, de l'air enrichi en oxygène (22 moles pour cent de $O_2$ et plus) et de l'oxygène pratiquement pur (95 moles pour cent d'oxygène et plus).

16. Procédé selon la revendication 1 ou 2, caractérisé en ce que ce modérateur de température est choisi parmi $H_2O$, $CO_2$, $N_2$, une partie refroidie de l'effluent gazeux provenant du générateur de gaz, et leurs mélanges.

17. Système à oxydation partielle servant à faire réagir un courant d'alimentation en combustible hydrocarboné liquide et un courant d'alimentation en gaz contenant de l'oxygène libre, en présence d'un modérateur de température, dans une zone réactionnelle d'un générateur de gaz non catalytique à écoulement libre, revêtu d'un réfractaire, à une température dans la gamme de 927 à 1649°C et sous une pression de 1 à 304 bars, pour produire un courant d'effluent gazeux comprenant du $H_2$, du CO, du $CH_4$, du $CO_2$, du carbone particulaire et au moins une substance du groupe constitué par $H_2O$, $H_2S$, COS, $N_2$ et Ar; et pour laver et refroidir le courant d'effluent gazeux avec de l'eau dans une zone de refroidissement brusque et de lavage des gaz, pour éliminer la quasi totalité de ce carbone particulaire entraîné sous forme d'un courant de dispersion carbone-eau et pour produire un courant d'effluent gazeux refroidi et lavé; caractérisé par un système servant à réguler la quantité de carbone particulaire non converti dans le courant d'effluent gazeux quittant la zone réactionnelle comprenant: un dispositif pour réguler automatiquement le débit du courant d'alimentation en gaz contenant de l'oxygène libre; un dispositif pour détecter automatiquement les débits et fournir des signaux correspondant aux débits du courant de gaz contenant de l'oxygène libre, du courant de combustible hydrocarboné liquide et du courant de dispersion carbone-eau; un dispositif analyseur de carbone pour échantillonner, analyser et fournir automatiquement plusieurs signaux successifs, chaque signal correspondant à la fraction pondérale de carbone présente dans chaque échantillon séparé de l'ensemble d'échantillons successifs de ladite dispersion carbone-eau soumise à l'analyse, en une certaine période de temps; un système d'alarme indicateur d'un niveau élevé ou faible de carbone particulaire; un dispositif de commande du système connecté à tous les dispositifs de détection de débit et au dispositif analyseur de carbone pour fournir un premier signal correspondant à un ajustement déterminé effectué sur un dispositif de régulation du débit de gaz contenant de l'oxygène libre ou en variante, pour fournir un second signal correspondant à un niveau élevé ou faible de production de carbone, à l'alarme indicatrice d'un niveau élevé ou faible de carbone particulaire, en fonction des signaux provenant des dispositifs de détection des débits du combustible hydrocarboné liquide et de la dispersion carbone-eau, et du dispositif analyseur de carbone; ledit dispositif de commande du système comportant un dispositif de stockage et de moyenne connecté au dispositif analyseur de carbone pour fournir un signal correspondant à la fraction pondérale moyenne de carbone particulaire en fonction de signaux provenant du dispositif analyseur de carbone; un dispositif connecté au dispositif de stockage et de moyen-âge et aux dispositifs de détection du débit de la dispersion carbone-eau, pour fournir un signal correspondant à la production réelle de carbone dans ladite zone réactionnelle; un dispositif pour fournir un signal représentant la production de carbone souhaitée dans ladite zone de réaction, en fonction des signaux provenant des dispositifs de détection du débit de combustible hydrocarboné liquide et d'un signal correspondant au produit de la fraction pondérale de carbone dans le combustible hydrocarboné liquide par la fraction pondérale souhaitée du carbone dans le combustible hydrocarboné liquide qui est entraîné sous forme de carbone particulaire dans le courant d'effluent gazeux sortant de la zone réactionnelle; un dispositif de traitement de signaux A, pour fourni un signal correspondant à la différence relative entre les

27

taux réel et souhaité de production de carbone particulaire non converti, en fonction des signaux réel et souhaité de production de carbone; un dispositif comparateur connecté au dispositif de traitement A, pour fournir un premier signal correspondant au pourcentage de variations à apporter au débit instantané du courant d'alimentation en gaz contenant de l'oxygène libre pour rapprocher l'un de l'autre les débits réel et souhaité de gaz contenant de l'oxygène libre ou en variante, pour fournir un second signal à l'alarme indicatrice d'un niveau élevé ou faible de carbone particulaire, en fonction du signal provenant du dispositif de traitement de signaux A; un dispositif connecté au dispositif comparateur et au dispositif de détection du débit de gaz contenant de l'oxygène libre, pour fournir un signal au dispositif de régulation du débit de gaz contenant de l'oxygène libre, lorsqu'un ajustement du débit du gaz contenant de l'oxygène libre est nécessaire, en fonction du premier signal provenant du premier dispositif comparateur et du signal provenant du dispositif de détection du gaz contenant de l'oxygène libre; et un dispositif de programmation connecté au dispositif de stockage et de moyenne pour commander son fonctionnement.

18. Système selon la revendication 17, caractérisé en outre par un système de régulation de température dans la zone réactionnelle comprenant: un dispositif pour réguler automatiquement le débit du courant d'alimentation en modérateur de température; un dispositif pour détecter automatiquement le débit du modérateur de température et fournir un signal correspondant; un dispositif analyseur de gaz pour échantillonner, analyser et fournir automatiquement plusieurs signaux successifs, chaque signal correspondant à la fraction molaire de $CH_4$ (base sèche) présent dans chaque échantillon séparé de l'ensemble d'échantillons successifs du courant d'effluent gazeux refroidi et lavé, soumis à l'analyse sur une certaine période de temps; une alarem indicatrice d'un niveau élevé ou faible de la température dans la zone réactionnelle; un dispositif de commande du système connecté aux dispositifs de détection du débit du modérateur de température et au dispositif analyseur de gaz, pour fournir un premier signal correspondant à un ajustement déterminé apporté au dispositif de régulation du débit de modérateur de température ou en variante, pour fournir un second signal correspondant à un niveau élevé ou faible de la température dans la zone réactionnelle, à ladite alarme indicatrice d'un niveau élevé ou faible de la température, en fonction des signaux provenant du dispositif de détection du débit du modérateur de température, et au dispositif analyseur de gaz; ledit dispositif de commande du système comportant un dispositif de stockage et de moyenne connecté au dispositif analyseur de gaz pour fournir un signal correspondant à la fraction molaire de $CH_4$ (base sèche) en fonction des signaux provenant du dispositif analyseur de gaz; un premier dispositif de traitement de signaux connecté au dispositif de stockage et de moyenne pour fournir un signal correspondant à la température réelle dans ladite zone réactionnelle, en fonction des signaux provenant du dispositif de stockage et de moyenne et des signaux représentant des constantes fournis par des dispositifs d'introduction de signaux continus; un second dispositif de traitement de signaux connecté au premier dispositif de traitement de signaux pour fournir un signal correspondant à la différence relative entre les températures réelle et souhaitée dans la zone réactionnelle, en fonction d'un signal provenant du premier dispositif de traitement de signaux, représentant la température réelle dans la zone réactionnelle, et d'un signal provenant d'un dispositif d'introduction de signaux continus, représentant la température souhaitée; un dispositif comparateur connecté au dit second dispositif de traitement de signaux pour fournir un signal correspondant au pourcentage de variations à apporter au débit instantané du modérateur de température, pour rapprocher l'un de l'autre les débits instantané et souhaité du modérateur de température, ou en variante, pour fournir un signal à ladite alarm indicatrice d'un niveau élevé ou faible de la température de la zone réactionnelle, en fonction du signal provenant de ce second dispositif de traitement de signaux; un dispositif connecté au dispositif comparateur et au dispositif de détection du débit du modérateur de température, pour fournir un signal au dispositif de régulation du débit du modérateur de température lorsqu'un ajustement du débit du modérateur de température est nécessaire, en fonction d'un signal provenant du dispositif comparateur et d'un signal provenant du dispositif de détection du débit du modérateur de température; et un dispositif de programmation connecté au dispositif de stockage et de moyenne pour commander son fonctionnement.

19. Système à oxydation partielle pour faire réagir un combustible hydrocarboné liquide et un gaz contenant de l'oxygène libre en présence d'un modérateur de température dans une zone réactionnelle d'un générateur de gaz non catalytique à écoulement libre, revêtu d'un réfractaire, à une température dans la gamme de 927 à 1649°C et sous une pression dans la gamme de 1 à 304 bars, pour produire un courant d'effluent gazeux contenant du $H_2$, du CO, du $CH_4$, du $CO_2$, du carbone particulaire et au moins une substance du groupe constitué par $H_2O$, $H_2S$, COS, $N_2$ et Ar; et pour laver et refroidir le courant d'effluent gazeux à l'eau dans une zone de refroidissement brusque et de lavage des gaz, pour éliminer la quasi totalité du carbone particulaire entraîné sous forme d'une dispersion carbone-eau et produire un courant d'effluent gazeux refroidi et lavé; caractérisé par un système de régulation de la température dans la zone réactionnelle comprenant: un dispositif pour réguler automatiquement le débit du modérateur de température; un dispositif pour détecter automatiquement le débit du modérateur de température et fournir un signal correspondant; un dispositif analyseur de gaz pour échantillonner, analyser et fournir automatiquement plusieurs signaux successifs, chaque signal correspondant à la fraction molaire de $CH_4$ (base sèche) présent dans chaque échantillon séparé d'un ensemble d'échantillons successifs du courant d'effluent gazeux refroidi et lavé, soumis à l'analyse en une certaine période de temps; une alarme indicatrice d'un niveau élevé ou faible de la température dans la zone réactionnelle; un dispositif de commande du système connecté au dispositif de détection du débit du modérateur de température et au

28

dispositif analyseur de gaz, pour fournir un premier signal correspondant à un ajustement déterminé du dispositif de régulation du débit du modérateur de température, ou en variante, pour fournir un second signal correspondant à un niveau élevé ou faible de la température dans la zone réactionnelle, à ladite alarme indicatrice d'un niveau élevé ou faible de la température, en fonction des signaux provenant du dispositif de détection du débit du modérateur de température, et du dispositif analyseur de gaz; ce dispositif de commande du système comportant un dispositif de stockage et de moyenne connecté au dispositif analyseur de gaz, pour fournir un signal correspondant à la fraction molaire de $CH_4$ (base sèche), en fonction de signaux provenant du dispositif analyseur de gaz, un premier dispositif de traitement de signaux connecté au dispositif de stockage et de moyenne, pour fournir un signal correspondant à la température réelle dans ladite zone réactionnelle, en fonction des signaux provenant du dispositif de stockage et de moyenne et de signaux représentant des constantes, tels qu'ils sont fournis par un dispositif d'introduction de signaux continus; un second dispositif de traitement de signaux connecté au premier dispositif de traitement de signaux, pour fournir un signal correspondant à la différence relative entre la température réelle et souhaitée dans la zone réactionnelle, en fonction d'un signal provenant du premier dispositif de traitement des signaux, représentant la température réelle dans la zone réactionnelle, et d'un signal provenant d'un dispositif d'introduction de signaux continus représentant la température souhaitée; un dispositif comparateur connecté au dit second dispositif de traitement de signaux pour fournir un signal correspondant au pourcentage de variations à faire subir au débit du modérateur de température pour rapprocher l'un de l'autre les débits instantané et souhaité du modérateur de température, ou en variante, pour fournir un signal à l'alarme indicatrice d'un niveau élevé ou faible de la température dans la zone réactionnelle, en fonction du signal provenant du dit second dispositif de traitement de signaux; un dispositif connecté au dispositif comparateur et au dispositif de détection du débit du modérateur de température pour fournir un signal au dispositif de régulation du débit du modérateur de température, lorsqu'un ajustement du débit du modérateur de température est nécessaire, en fonction d'un signal provenant du dispositif comparateur et d'un signal provenant du dispositif de détection du débit du modérateur de température; et un dispositif de programmation connecté au dispositif de stockage et de moyenne pour commander son fonctionnement.

20. Système selon la revendication 19, caractérisé en ce que le premier dispositif de traitement de signaux servant à fournir un signal correspondant à la température réelle dans ladite zone réactionnelle, comporte un dispositif pour fournir le dit signal selon l'équation suivante:

$$T = \frac{A}{B+Ln(CH_4)} - 460 \times \frac{9}{5} + 32$$

où

T est la températur réelle dans la zone réactionnelle (°C)

$(CH_4)$ est la fraction molaire de $CH_4$ (base sèche); et

A et B sont des constantes.

21. Système selon la revendication 20, caractérisé en ce que le combustible hydrocarboné liquide est du pétrole, en ce que le modérateur de température est $H_2O$ et en ce que A=56 562,7 et B=20,295.

22. Système selon la revendication 17, caractérisé en ce que le signal envoyé au dispositif de régulation du débit du gaz contenant de l'oxygène libre, réinitialise un dispositif enregistreur-régulateur du débit qui fournit un signal d'adjustement pour réguler un clapet de régulation du courant d'alimentation en gaz contenant de l'oxygène libre.

23. Système selon la revendication 19, caractérisé en ce que le signal envoyé au dispositif de régulation du débit du modérateur de température, réinitialise un dispositif de commande de vitesse qui fournit un signal d'ajustement pour réguler la vitesse d'une pompe à déplacement positif utilisée pour le courant d'alimentation en modérateur de température.

Fig. I.

Fig. 2.

0 082 634

Fig. 3.

Fig.4.

Fig.5.